# EUROPEAN PATENT APPLICATION

(11) **EP 4 575 962 A1**
(43) Date of publication of application: **25.06.2025**
(21) Application number: 22956565.0
(22) Date of filing: 24.08.2022
(51) Int. Cl.: G06Q 30/02, G01C 21/36, G01C 21/00, H04R 3/00, H04B 14/04, G06F 16/635

(54) **ADVERTISEMENT INFORMATION PROVISION DEVICE AND PROVISION METHOD**

(71) Applicant: LG Electronics Inc., Yeongdeungpo-gu Seoul 07336 (KR)
(72) Inventor: SONG, Chiwon, Seoul 06772 (KR); KIM, Kihyeon, Seoul 06772 (KR); KIM, Joonghang, Seoul 06772 (KR)
(74) Representative: Vossius & Partner Patentanwälte Rechtsanwälte mbB
(86) International application number: PCT/KR2022/012672
(87) International publication number: WO 2024/043359

(57) **Abstract**

The present invention comprises: a communication unit communicating with a cloud server; an interface unit establishing a communication connection with a sound output unit and a display unit of a vehicle; an audio detection unit which receives PCM data stored in an audio buffer of the sound output unit through the interface unit so as to generate audio information including the characteristics of an output sound signal; and a processor which controls the communication unit to transmit the audio information to the cloud server, requests advertisement information including POI information corresponding to the audio information from the cloud server, and when the advertisement information is received from the cloud server in response to the request, controls the interface unit such that content included in the POI information and the advertisement information is displayed on the display unit of the vehicle.

## Description

### Technical Field

The present disclosure relates to a device provided in or connected to a vehicle, and more particularly, to a device and method of providing advertisement information according to an audio advertisement broadcast in the vehicle.

### Background Art

With the development of current infotainment and telematics technologies, technology has emerged that provides various information to a passenger in a vehicle while the vehicle is driving. As part of the technology, a passenger on board the vehicle may retrieve desired information or receive various entertainment information while the vehicle is driving. Furthermore, as it becomes possible to provide various information to a passenger on board the vehicle in this way, the advertisement industry using the infotainment and telematics technologies has developed significantly.

Meanwhile, an advertisement provided to a vehicle passenger may be provided in two main ways. One is a video advertisement that provides both visual and auditory information, and the other is an audio advertisement that provides an advertisement as sound information. However, the video advertisement provides both visual and auditory information, so it has a high delivery effect, but there is a problem in that it may interfere with driving for a driver who must drive the vehicle. Therefore, depending on the driver, an advertisement output may be limited or an infotainment function may be turned off to block advertisement delivery. That is, there is a problem in that an advertisement is highly likely to be avoided.

In contrast, an audio advertisement has an advantage of being inexpensive to produce because it provides auditory information, and being relatively safe and less likely to be avoided because it hardly interferes with driving. Additionally, since a regionally targeted advertisement is allowed through a regional broadcasting station, and a subject of information provided for each audio channel is often specified, there is an advantage in that an advertisement may be easily targeted to a listener who is listening to a specific subject.

However, in the case of an audio advertisement, there is a problem in that its advertisement effect is weak because it only provides auditory information. That is, since its advertisement effect is weak, there is a problem in that a passenger's attention to the advertisement is low, and thus it is difficult to flow the passenger into the advertisement. Furthermore, due to such a weak advertisement effect and difficulty in advertisement inflow, there is a problem in that it is difficult to measure the advertisement effect.

### Disclosure of Invention

### Technical Problem

The present disclosure aims to solve the foregoing problems and other problems, and an aspect of the present disclosure is to provide an advertisement information provision device that can increase the effectiveness of an audio advertisement and draw a passenger's attention to the audio advertisement, and a method thereof.

In addition, an aspect of the present disclosure is to provide an advertisement information provision device that can allow a passenger to later receive advertisement information on an audio advertisement he or she has listened to at the passenger's request, and a method thereof.

In addition, an aspect of the present disclosure is to provide an advertisement information provision device that can provide at least one advertisement information matching a passenger among previously broadcast audio advertisements according to the setting state of the passenger or the vehicle.

### Solution to Problem

In order to achieve the foregoing and other objectives, according to an aspect of the present disclosure, an advertisement information provision device according to an embodiment of the present disclosure may include a communication unit that communicates with a cloud server, an interface unit disposed to perform a communication connection with a sound output unit and a display in a vehicle, an audio detection unit that receives pulse code modulation (PCM) data stored in an audio buffer of the sound output unit through the interface unit and generates audio information including a feature of a sound signal output from the sound output unit, and a processor that controls the communication unit to transmit the generated audio information to the cloud server, requests advertisement information including point-of-interest (POI) information of an audio advertisement corresponding to the audio information in response to the transmitted audio information from the cloud server, and controls, when the advertisement information is received from the cloud server by the request, the interface unit so as to display content included in the POI information and the received advertisement information on the display of the vehicle.

In one embodiment, the processor may detect, when a driving path of the vehicle is set, at least one advertisement information whose location corresponding to the POI information is located within a preset distance from a point on the driving path from among advertisement information items received from the cloud server, and control the interface unit so as to display the POI information and content included in the detected advertisement information on the display along with the driving path.

In one embodiment, the processor may receive a result of detecting a passenger of the vehicle through the interface unit, detect at least one of advertisement information items received from the cloud server based on the result of detecting the passenger, and control the interface unit so as to display the POI information and content included in the detected advertisement information on the display.

In one embodiment, the processor may detect at least one of advertisement information items received from the cloud server based on a result of comparing advertisement subjects included in a passenger profile corresponding to the result of detecting the passenger with an advertisement subject of each of the advertisement information items received from the cloud server, wherein the passenger profile includes preferred advertisement subjects according to the passenger's gender and age group.

In one embodiment, the processor may generate, when advertisement subjects preferred by a specific passenger are learned, a customized passenger profile that includes the learned advertisement subjects, and detect, as the result of detecting the passenger, when the detected passenger is the specific passenger, at least one of the advertisement information items received from the cloud server based on the customized passenger profile, wherein the advertisement subjects preferred by the specific passenger are learned based on a place visited by the specific passenger above a predetermined number of times.

In one embodiment, the audio information may include audio fingerprint information corresponding to a feature of the sound signal, wherein the audio fingerprint information is a PCM pattern analyzed from at least some of the samples of the PCM data sampled at regular time intervals.

In one embodiment, the processor may control the audio detection unit to further collect information on a time at which the PCM data is received and an application controlling the sound output unit when the PCM data is received, and transmit the audio fingerprint information and the information of the collected time and application as the audio information to the cloud server, wherein the cloud server detects audio advertisements corresponding to the audio fingerprint information, retrieves one audio advertisement from among the detected audio advertisements according to the information of the collected time and application as an audio advertisement corresponding to the audio information, and transmits advertisement information corresponding to the retrieved audio advertisement in response to the transmission of the audio information.

In one embodiment, the information of the application may include at least one of information on a radio program, a radio channel, and a radio frequency broadcast through the application.

In one embodiment, the advertisement information may include POI information including a name and location of a store, shop, or business providing a service corresponding to an audio advertisement corresponding to the audio information, and at least one graphic object representing information on the service corresponding to the audio advertisement.

In one embodiment, the device may further include an advertisement information identification unit that identifies an audio advertisement corresponding to the audio information, wherein the processor requests advertisement information on a specific audio advertisement identified based on the audio information from the cloud server, and receives the advertisement information from the cloud server in response to the request.

In one embodiment, the advertisement information identification unit may include audio fingerprint information items on a plurality of different audio advertisements as comparison data, to identify a specific audio advertisement corresponding to the feature of the sound signal by comparing the feature of the sound signal included in the audio information with the audio fingerprint information items included in the comparison data.

In one embodiment, the respective audio fingerprint information items may be PCM patterns obtained by sampling PCM data corresponding to each audio advertisement at regular time intervals, and analyzing from at least some of the sampled PCM data items, wherein the feature of the sound signal is a PCM pattern analyzed from at least some of the samples of PCM data sampled at regular time intervals from the PCM data stored in the audio buffer of the sound output unit.

In one embodiment, the processor may update the comparison data based on update data provided from the cloud server, wherein the cloud server transmits, when a new audio advertisement is added, audio fingerprint information corresponding to the newly added audio advertisement to the advertisement information provision device as the update data.

In one embodiment, the communication unit may perform a communication connection with a preset mobile terminal to receive information on the vehicle, wherein the processor controls the communication unit to display POI information and content of advertisement information received from the cloud server on the mobile terminal.

In one embodiment, the processor may control the interface unit to detect a validity period of a service included in each advertisement information, from respective advertisement information items received from the cloud server, and to display POI information and content of advertisement information whose validity period has not expired based on a current date and time on the display.

In one embodiment, the advertisement information provision device may transmit a location of the vehicle acquired from the vehicle along with the audio information to the cloud server, and the cloud server may compare a location of a store providing a service of an audio advertisement corresponding to the audio information with the location of the vehicle, retrieve, when the location of the store does not match the location of the vehicle, a store matching the location of the vehicle from among other stores providing the service of the audio advertisement, and provide advertisement information including POI information corresponding to the retrieved store to the advertisement information provision device in response to the transmitted audio information, wherein the location of the vehicle is information on a predetermined region where the vehicle is located.

In order to achieve the foregoing or other objectives, according to an aspect of the present disclosure, a method of controlling an advertisement information provision device according to an embodiment of the present disclosure may include receiving pulse code modulation (PCM) data stored in an audio buffer of a sound output unit in a vehicle to detect audio fingerprint information of an sound signal output from the sound output unit, requesting advertisement information including point-of-interest (POI) information on a specific audio advertisement corresponding to the audio fingerprint information and information on a service provided through the specific audio advertisement from a cloud server, checking, in response to the request, when advertisement information on the specific audio advertisement is received, whether an output condition of the received advertisement information is satisfied, and displaying POI information of the received advertisement information and information of the service on a display of the vehicle based on a result of the check.

In one embodiment, the requesting of the advertisement information from the cloud server may include identifying one audio advertisement corresponding to audio fingerprint information detected from PCM data of the audio buffer based on comparison data including audio fingerprint information items of a plurality of different audio advertisements, and requesting advertisement information corresponding to the identified one audio advertisement from the cloud server.

In one embodiment, the audio fingerprint information may be a PCM pattern analyzed from at least some of the samples of the PCM data sampled at regular time intervals.

In addition, a cloud server according to an embodiment of the present disclosure may include a communication unit that receives audio fingerprint information, an advertisement information database including audio fingerprint information items respectively corresponding to a plurality of different audio advertisements, and advertisement information items including point-of-interest (POI) information corresponding to information on services provided from the respective plurality of audio advertisements and location information of stores providing the services, a retrieval engine that retrieves advertisement information of a specific audio advertisement corresponding to the received audio fingerprint information from the advertisement information database, and a server controller that controls the communication unit to control the retrieval engine to retrieve, when the audio fingerprint information is received through the communication unit, an audio advertisement corresponding to the received audio fingerprint information and to transmit, when the audio advertisement is retrieved, advertisement information of the retrieved audio advertisement as a response to the received audio fingerprint information.

### Advantageous Effects of Invention

The effects of an advertisement information provision device and method according to the present disclosure will be described as follows.

According to at least one of embodiments of the present disclosure, the present disclosure may detect a broadcast audio advertisement and provide point-of-interest (POI) information corresponding to the detected audio advertisement, thereby having an effect of increasing the effectiveness of the audio advertisement and drawing a passenger's attention to the audio advertisement.

Furthermore, the present disclosure may receive and store POI information items corresponding to previously broadcast audio advertisements, and provide the received and stored POI information items through a terminal that provides vehicle information at the passenger's request, thereby having an effect of allowing the passenger to receive his or her desired POI information from among the previously broadcast audio advertisements through retrieval.

In addition, the present disclosure may determine at least one audio advertisement that matches a passenger based on a vehicle's location, a passenger identification result, a set path, or the like, from among a plurality of audio advertisements being broadcast, and receive only POI information corresponding to the determined audio advertisement, thereby having an effect of preventing unnecessary audio advertisements from being delivered.

### Brief Description of Drawings

FIG. 1 is a view illustrating an appearance of a vehicle in accordance with an embodiment of the present disclosure.
FIG. 2 is a diagram illustrating the appearance of the vehicle at various angles.
FIGS. 3 and 4 are diagrams illustrating an inside of a vehicle in accordance with an embodiment of the present disclosure.
FIGS. 5 and 6 are diagrams illustrating objects in accordance with an embodiment of the present disclosure.
FIG. 7 is a block diagram illustrating a vehicle in accordance with an embodiment of the present disclosure.
FIG. 8 is a block diagram illustrating a structure of an advertisement information provision device according to an embodiment of the present disclosure.
FIG. 9 is a conceptual diagram illustrating a flow of information items exchanged between an advertisement device and a vehicle according to an embodiment of the present disclosure through an interface unit.
FIG. 10 is a flowchart illustrating an operation process in which advertisement information corresponding to audio information is provided between an advertisement information provision device and a cloud server according to an embodiment of the present disclosure.
FIG. 11 is a flowchart illustrating another operation process in which advertisement information corresponding to audio information is provided between an advertisement information provision device and a cloud server according to an embodiment of the present disclosure.
FIG. 12 is a flowchart more specifically illustrating an operation process of collecting audio information in an advertisement information provision device according to an embodiment of the present disclosure.
FIG. 13 is a flowchart illustrating an operation process of determining that an advertisement corresponding to audio information has been detected based on a passenger detection result according to an embodiment of the present disclosure.
FIG. 14 is a flowchart illustrating an operation process in which a cloud server provides advertisement information corresponding to an audio advertisement according to the location of an advertisement information provision device according to an embodiment of the present disclosure.
FIG. 15 is a flowchart illustrating an operation process of outputting advertisement information corresponding to at least one audio information based on a set driving path in an advertisement information provision device according to an embodiment of the present disclosure.
FIG. 16 is an exemplary diagram showing an example in which POI information according to a previously broadcast audio advertisement is displayed according to a driving path set according to the operation process of FIG. 15.
FIG. 17 is a flowchart illustrating an operation process of providing advertisement information items corresponding to previously broadcast audio advertisements through a terminal providing vehicle information in an advertisement information provision device according to an embodiment of the present disclosure.
FIG. 18 is a flowchart illustrating an operation process in which POI information items are output through the terminal according to the operation process of FIG. 17.

### Mode for the Invention

Hereinafter, embodiments of the present disclosure will be described in detail with reference to the accompanying drawings, and the same or similar elements are designated with the same numeral references regardless of the numerals in the drawings and redundant description thereof will be omitted. A suffix "module" or "unit" used for elements disclosed in the following description is merely intended for easy description of the specification, and the suffix itself is not intended to give any special meaning or function. In describing the embodiments disclosed herein, moreover, the detailed description will be omitted when specific description for publicly known technologies to which the invention pertains is judged to obscure the gist of the present disclosure. The accompanying drawings are used to help easily understand various technical features and it should be understood that the embodiments presented herein are not limited by the accompanying drawings. As such, the present disclosure should be construed to extend to any alterations, equivalents and substitutes in addition to those which are particularly set out in the accompanying drawings.

The terms including an ordinal number such as first, second, and the like may be used to describe various elements, but the elements should not be limited by those terms. The terms are used merely for the purpose to distinguish an element from another element.

It will be understood that when an element is referred to as being "connected with" another element, the element can be connected with the another element or intervening elements may also be present. In contrast, when an element is referred to as being "directly connected with" another element, there are no intervening elements present.

A singular representation may include a plural representation unless it represents a definitely different meaning from the context.

Terms "include" or "has" used herein should be understood that they are intended to indicate the existence of a feature, a number, a step, an element, a component or a combination thereof disclosed in the specification, and it may also be understood that the existence or additional possibility of one or more other features, numbers, steps, elements, components or combinations thereof are not excluded in advance.

A vehicle according to an embodiment of the present disclosure may be understood as a conception including automobiles, motorcycles, and the like. Hereinafter, the vehicle will be described based on a car.

The vehicle may include any of an internal combustion engine car having an engine as a power source, a hybrid vehicle having an engine and an electric motor as power sources, an electric vehicle having an electric motor as a power source, and the like.

In the following description, a left side of a vehicle refers to a left side in a driving direction of the vehicle, and a right side of the vehicle refers to a right side in the driving direction.

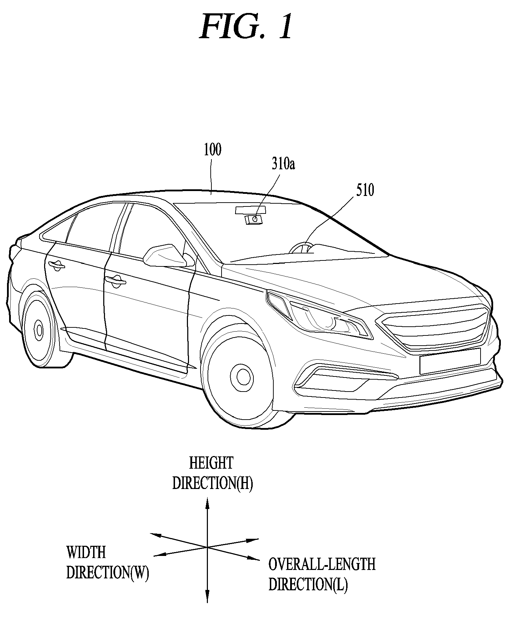

FIG. 1 is a view illustrating appearance of a vehicle in accordance with an embodiment of the present disclosure.

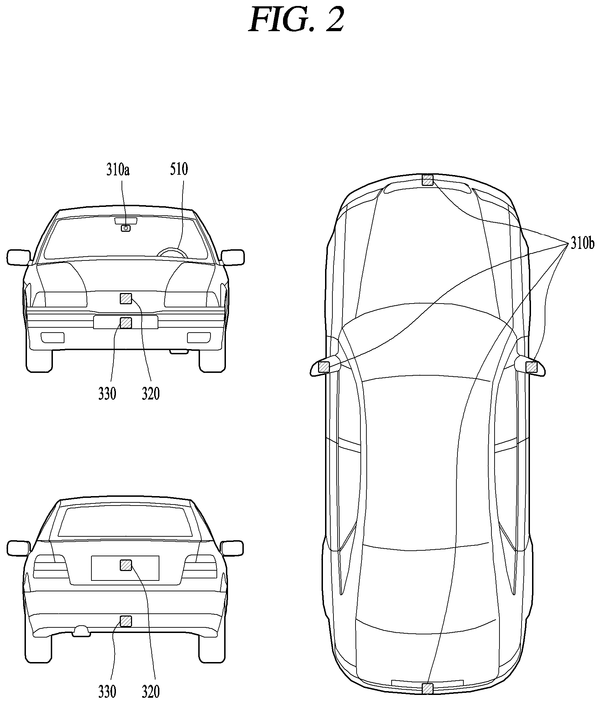

FIG. 2 is a diagram illustrating the appearance of the vehicle at various angles.

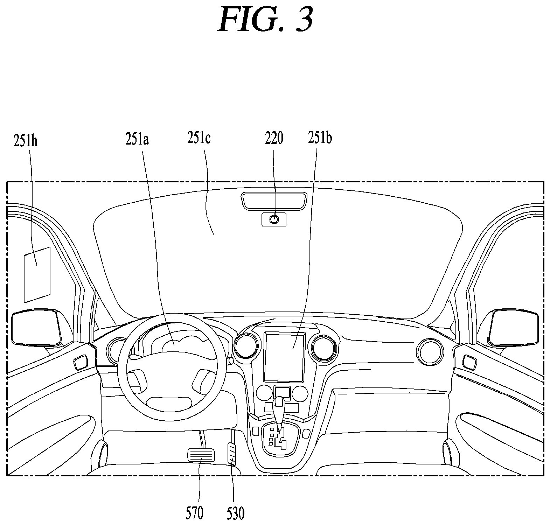

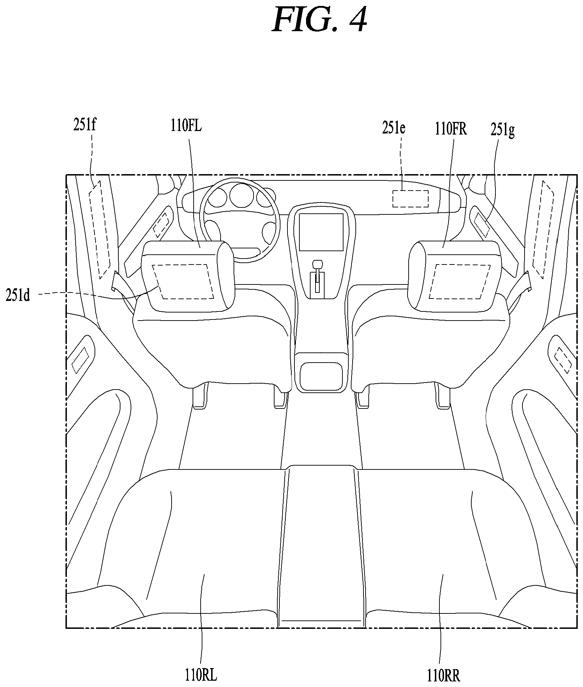

FIGS. 3 and 4 are diagrams illustrating an inside of a vehicle in accordance with an embodiment of the present disclosure.

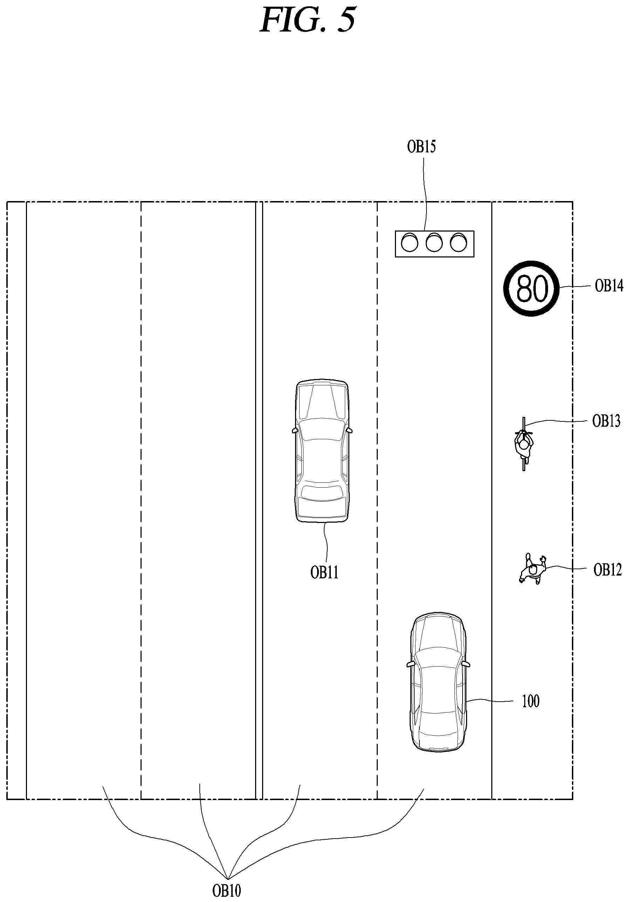

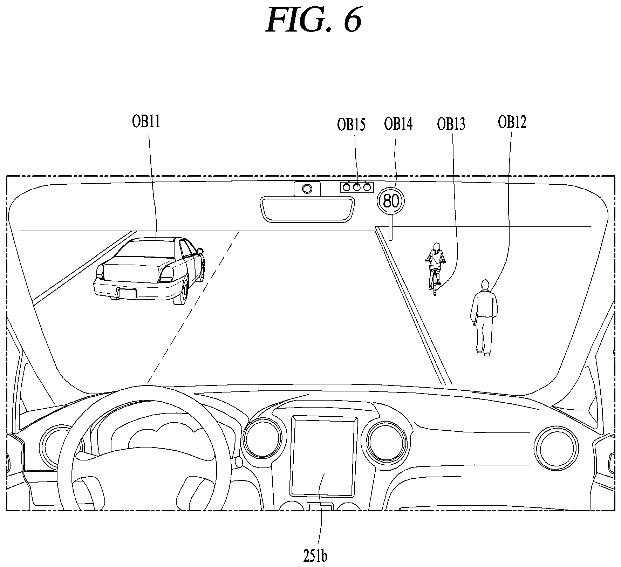

FIGS. 5 and 6 are diagrams illustrating objects in accordance with an embodiment of the present disclosure.

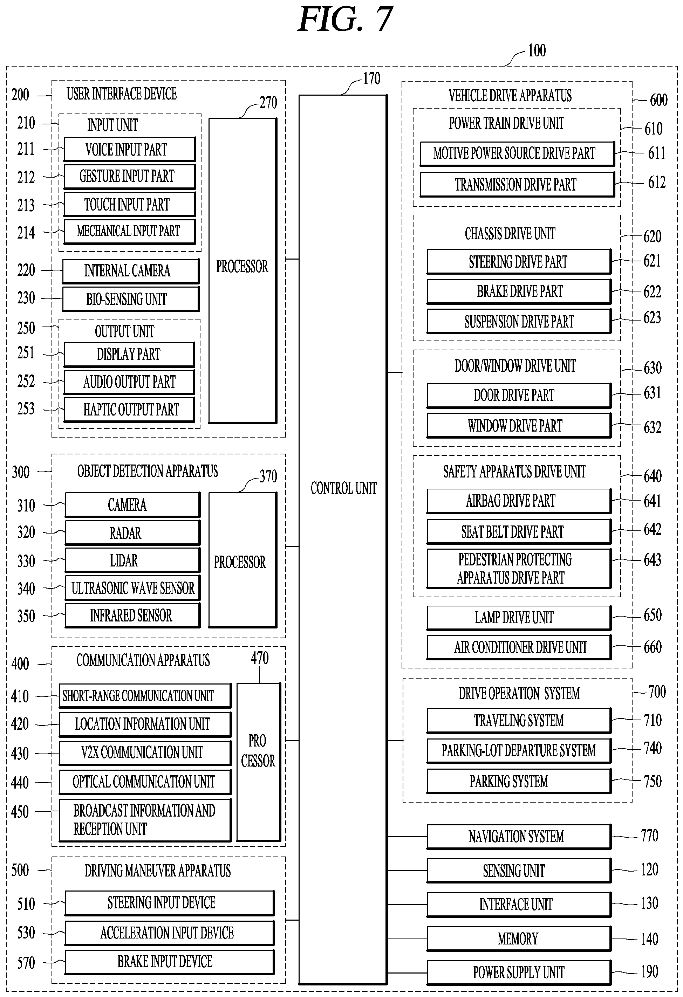

FIG. 7 is a block diagram illustrating a vehicle in accordance with an embodiment of the present disclosure.

As illustrated in FIG. 1 to 7, a vehicle 100 may include wheels turning by a driving force, and a steering input device 510 for adjusting a driving (ongoing, moving) direction of the vehicle 100.

The vehicle 100 may be an autonomous vehicle.

The vehicle 100 may be switched into an autonomous mode or a manual mode based on a user input.

For example, the vehicle 100 may be converted from the manual mode into the autonomous mode or from the autonomous mode into the manual mode based on a user input received through a user interface apparatus 200.

The vehicle 100 may be switched into the autonomous mode or the manual mode based on driving environment information. The driving environment information may be generated based on object information provided from an object detecting apparatus 300.

For example, the vehicle 100 may be switched from the manual mode into the autonomous mode or from the autonomous mode into the manual mode based on driving environment information generated in the object detecting apparatus 300.

In an example, the vehicle 100 may be switched from the manual mode into the autonomous mode or from the autonomous mode into the manual mode based on driving environment information received through a communication apparatus 400.

The vehicle 100 may be switched from the manual mode into the autonomous mode or from the autonomous module into the manual mode based on information, data or signal provided from an external device.

When the vehicle 100 is driven in the autonomous mode, the vehicle 100 may be driven based on an operation system 700.

For example, the autonomous vehicle 100 may be driven based on information, data or signal generated in a driving system 710, a parking exit system 740 and a parking system 750.

When the vehicle 100 is driven in the manual mode, the autonomous vehicle 100 may receive a user input for driving through a driving control apparatus 500. The vehicle 100 may be driven based on the user input received through the driving control apparatus 500.

An overall length refers to a length from a front end to a rear end of the vehicle 100, a width refers to a width of the vehicle 100, and a height refers to a length from a bottom of a wheel to a roof. In the following description, an overall-length direction L may refer to a direction which is a criterion for measuring the overall length of the vehicle 100, a width direction W may refer to a direction that is a criterion for measuring a width of the vehicle 100, and a height direction H may refer to a direction that is a criterion for measuring a height of the vehicle 100.

As illustrated in FIG. 7, the vehicle 100 may include a user interface device 200, an object detection device 300, a communication device 400, a driving control device 500, a vehicle operation device 600, an operation system 700, a navigation system 770, a sensing unit 120, an interface unit 130, a memory 140, a controller 170 and a power supply unit 190.

According to embodiments, the vehicle 100 may include more components in addition to components to be explained in this specification or may not include some of those components to be explained in this specification.

The user interface apparatus 200 is an apparatus for communication between the vehicle 100 and a user. The user interface device 200 may receive a user input and provide information generated in the vehicle 100 to the user. The vehicle 100 may implement user interfaces (UIs) or user experiences (UXs) through the user interface apparatus 200.

The user interface apparatus 200 may include an input unit 210, an internal camera 220, a biometric sensing unit 230, an output unit 250 and a processor 270.

According to embodiments, the user interface apparatus 200 may include more components in addition to components to be explained in this specification or may not include some of those components to be explained in this specification.

The input unit 200 may allow the user to input information. Data collected in the input unit 120 may be analyzed by the processor 270 and processed as a user's control command.

The input unit 200 may be disposed inside the vehicle. For example, the input unit 200 may be disposed on one area of a steering wheel, one area of an instrument panel, one area of a seat, one area of each pillar, one area of a door, one area of a center console, one area of a headlining, one area of a sun visor, one area of a windshield, one area of a window, or the like.

The input unit 200 may include a voice input module 211, a gesture input module 212, a touch input module 213, and a mechanical input module 214.

The audio input module 211 may convert a user's voice input into an electric signal. The converted electric signal may be provided to the processor 270 or the controller 170.

The audio input module 211 may include at least one microphone.

The gesture input module 212 may convert a user's gesture input into an electric signal. The converted electric signal may be provided to the processor 270 or the controller 170.

The gesture input module 212 may include at least one of an infrared sensor and an image sensor for detecting the user's gesture input.

According to embodiments, the gesture input module 212 may detect a user's three-dimensional (3D) gesture input. To this end, the gesture input module 212 may include a light emitting diode outputting a plurality of infrared rays or a plurality of image sensors.

The gesture input module 212 may detect the user's 3D gesture input by a time of flight (TOF) method, a structured light method or a disparity method.

The touch input module 213 may convert the user's touch input into an electric signal. The converted electric signal may be provided to the processor 270 or the controller 170.

The touch input module 213 may include a touch sensor for detecting the user's touch input.

According to an embodiment, the touch input module 213 may be integrated with the display module 251 so as to implement a touch screen. The touch screen may provide an input interface and an output interface between the vehicle 100 and the user.

The mechanical input module 214 may include at least one of a button, a dome switch, a jog wheel, and a jog switch. An electric signal generated by the mechanical input module 214 may be provided to the processor 270 or the controller 170.

The mechanical input module 214 may be arranged on a steering wheel, a center fascia, a center console, a cockpit module, a door and the like.

The internal camera 220 may acquire an internal image of the vehicle. The processor 270 may detect a user's state based on the internal image of the vehicle. The processor 270 may acquire information related to the user's gaze from the internal image of the vehicle. The processor 270 may detect a user gesture from the internal image of the vehicle.

The biometric sensing unit 230 may acquire the user's biometric information. The biometric sensing unit 230 may include a sensor for detecting the user's biometric information and acquire fingerprint information and heart rate information regarding the user using the sensor. The biometric information may be used for user authentication.

The output unit 250 may generate an output related to a visual, auditory or tactile signal.

The output unit 250 may include at least one of a display module 251, an audio output module 252 and a haptic output module 253.

The display module 251 may output graphic objects corresponding to various types of information.

The display module 251 may include at least one of a liquid crystal display (LCD), a thin film transistor-LCD (TFT LCD), an organic light-emitting diode (OLED), a flexible display, a three-dimensional (3D) display and an e-ink display.

The display module 251 may be inter-layered or integrated with a touch input module 213 to implement a touch screen.

The display module 251 may be implemented as a head up display (HUD). When the display module 251 is implemented as the HUD, the display module 251 may be provided with a projecting module so as to output information through an image which is projected on a windshield or a window.

The display module 251 may include a transparent display. The transparent display may be attached to the windshield or the window.

The transparent display may have a predetermined degree of transparency and output a predetermined screen thereon. The transparent display may include at least one of a thin film electroluminescent (TFEL), a transparent OLED, a transparent LCD, a transmissive transparent display and a transparent LED display. The transparent display may have adjustable transparency.

Meanwhile, the user interface apparatus 200 may include a plurality of display modules 251a to 251g.

The display module 251 may be disposed on one area of a steering wheel, one area 521a, 251b, 251e of an instrument panel, one area 251d of a seat, one area 251f of each pillar, one area 251g of a door, one area of a center console, one area of a headlining or one area of a sun visor, or implemented on one area 251c of a windshield or one area 251h of a window.

The audio output module 252 may convert an electric signal provided from the processor 270 or the controller 170 into an audio signal for output. To this end, the audio output module 252 may include at least one speaker.

The haptic output module 253 generates a tactile output. For example, the haptic output module 253 may vibrate the steering wheel, a safety belt, a seat 110FL, 110FR, 110RL, 110RR such that the user can recognize such output.

The processor 270 may control an overall operation of each unit of the user interface apparatus 200.

According to an embodiment, the user interface apparatus 200 may include a plurality of processors 270 or may not include any processor 270.

When the processor 270 is not included in the user interface apparatus 200, the user interface apparatus 200 may operate according to a control of a processor of another apparatus within the vehicle 100 or the controller 170.

Meanwhile, the user interface apparatus 200 may be called as a display device for vehicle.

The user interface apparatus 200 may operate according to the control of the controller 170.

The object detecting apparatus 300 is an apparatus for detecting an object located at outside of the vehicle 100.

The object may be a variety of objects associated with driving (operation) of the vehicle 100.

Referring to FIGS. 5 and 6, an object O may include a traffic lane OB10, another vehicle OB11, a pedestrian OB12, a two-wheeled vehicle OB13, traffic signals OB14 and OB15, light, a road, a structure, a speed hump, a terrain, an animal and the like.

The lane OB10 may be a driving lane, a lane next to the driving lane or a lane on which another vehicle comes in an opposite direction to the vehicle 100. The lanes OB10 may be a concept including left and right lines forming a lane.

The another vehicle OB11 may be a vehicle which is moving around the vehicle 100. The another vehicle OB11 may be a vehicle located within a predetermined distance from the vehicle 100. For example, the another vehicle OB11 may be a vehicle which moves before or after the vehicle 100.

The pedestrian OB12 may be a person located near the vehicle 100. The pedestrian OB12 may be a person located within a predetermined distance from the vehicle 100. For example, the pedestrian OB12 may be a person located on a sidewalk or roadway.

The two-wheeled vehicle OB12 may refer to a vehicle (transportation facility) that is located near the vehicle 100 and moves using two wheels. The two-wheeled vehicle OB12 may be a vehicle that is located within a predetermined distance from the vehicle 100 and has two wheels. For example, the two-wheeled vehicle OB13 may be a motorcycle or a bicycle that is located on a sidewalk or roadway.

The traffic signals may include a traffic light OB15, a traffic sign OB14 and a pattern or text drawn on a road surface.

The light may be light emitted from a lamp provided on another vehicle. The light may be light generated from a streetlamp. The light may be solar light.

The road may include a road surface, a curve, an upward slope, a downward slope and the like.

The structure may be an object that is located near a road and fixed on the ground. For example, the structure may include a streetlamp, a roadside tree, a building, an electric pole, a traffic light, a bridge and the like.

The terrain may include a mountain, a hill, and the like.

Meanwhile, objects may be classified into a moving object and a fixed object. For example, the moving object may be a concept including another vehicle and a pedestrian. The fixed object may be, for example, a traffic signal, a road, or a structure.

The object detecting apparatus 300 may include a camera 310, a radar 320, a LiDAR 330, an ultrasonic sensor 340, an infrared sensor 350, and a processor 370.

According to an embodiment, the object detecting apparatus 300 may further include other components in addition to the components described, or may not include some of the components described.

The camera 310 may be located on an appropriate portion outside the vehicle to acquire an external image of the vehicle. The camera 310 may be a mono camera, a stereo camera 310a, an AVM (Around View Monitoring) camera 310b, or a 360-degree camera.

For example, the camera 310 may be disposed adjacent to a front windshield within the vehicle to acquire a front image of the vehicle. Or, the camera 310 may be disposed adjacent to a front bumper or a radiator grill.

For example, the camera 310 may be disposed adjacent to a rear glass within the vehicle to acquire a rear image of the vehicle. Alternatively, the camera 310 may be disposed adjacent to a rear bumper, a trunk or a tail gate.

For example, the camera 310 may be disposed adjacent to at least one of side windows within the vehicle to acquire a side image of the vehicle. Alternatively, the camera 310 may be disposed adjacent to a side mirror, a fender or a door.

The camera 310 may provide an acquired image to the processor 370.

The radar 320 may include electric wave transmitting and receiving portions. The radar 320 may be implemented as a pulse radar or a continuous wave radar according to a principle of emitting electric waves. The radar 320 may be implemented in a frequency modulated continuous wave (FMCW) manner or a frequency shift keying (FSK) manner according to a signal waveform, among the continuous wave radar methods.

The radar 320 may detect an object in a time of flight (TOF) manner or a phase-shift manner through the medium of electromagnetic waves, and detect a location of the detected object, a distance from the detected object and a relative speed with the detected object.

The radar 320 may be disposed on an appropriate location outside the vehicle for detecting an object which is located at a front, rear or side of the vehicle.

The lidar 330 may include laser transmitting and receiving portions. The LiDAR 330 may be implemented in a time of flight (TOF) manner or a phase-shift manner.

The LiDAR 330 may be implemented as a drive type or a non-drive type.

For the drive type, the LiDAR 330 may be rotated by a motor and detect object near the vehicle 100.

For the non-drive type, the LiDAR 330 may detect, through light steering, objects which are located within a predetermined range based on the vehicle 100. The vehicle 100 may include a plurality of non-drive type LiDARs 330.

The lidar 330 may detect an object in a time of flight (TOF) manner or a phase-shift manner through the medium of laser light, and detect a location of the detected object, a distance from the detected object and a relative speed with the detected object.

The LiDAR 330 may be disposed on an appropriate position outside the vehicle for detecting an object located at the front, rear or side of the vehicle.

The ultrasonic sensor 340 may include ultrasonic wave transmitting and receiving portions. The ultrasonic sensor 340 may detect an object based on an ultrasonic wave, and detect a position of the detected object, a distance from the detected object and a relative speed with the detected object.

The ultrasonic sensor 340 may be disposed on an appropriate position outside the vehicle for detecting an object located at the front, rear or side of the vehicle.

The infrared sensor 350 may include infrared light transmitting and receiving portions. The infrared sensor 340 may detect an object based on infrared light, and detect a location of the detected object, a distance from the detected object and a relative speed with the detected object.

The infrared sensor 350 may be disposed on an appropriate location outside the vehicle for detecting an object located at the front, rear or side of the vehicle.

The processor 370 may control an overall operation of each unit of the object detecting apparatus 300.

The processor 370 may detect an object based on an acquired image, and track the object. The processor 370 may execute operations, such as a calculation of a distance from the object, a calculation of a relative speed with the object and the like, through an image processing algorithm.

The processor 370 may detect an object based on a reflected electromagnetic wave which an emitted electromagnetic wave is reflected from the object, and track the object. The processor 370 may execute operations, such as a calculation of a distance from the object, a calculation of a relative speed with the object and the like, based on the electromagnetic wave.

The processor 370 may detect an object based on a reflected laser beam which an emitted laser beam is reflected from the object, and track the object. The processor 370 may execute operations, such as a calculation of a distance from the object, a calculation of a relative speed with the object and the like, based on the laser beam.

The processor 370 may detect an object based on a reflected ultrasonic wave which an emitted ultrasonic wave is reflected from the object, and track the object. The processor 370 may execute operations, such as a calculation of a distance from the object, a calculation of a relative speed with the object and the like, based on the ultrasonic wave.

The processor 370 may detect an object based on reflected infrared light which emitted infrared light is reflected from the object, and track the object. The processor 370 may execute operations, such as a calculation of a distance from the object, a calculation of a relative speed with the object and the like, based on the infrared light.

According to an embodiment, the object detecting apparatus 300 may include a plurality of processors 370 or may not include any processor 370. For example, each of the camera 310, the radar 320, the LiDAR 330, the ultrasonic sensor 340 and the infrared sensor 350 may include the processor in an individual manner.

When the processor 370 is not included in the object detecting apparatus 300, the object detecting apparatus 300 may operate according to the control of a processor of an apparatus within the vehicle 100 or the controller 170.

The object detecting apparatus 400 may operate according to the control of the controller 170.

The communication apparatus 400 is an apparatus for performing communication with an external device. Here, the external device may be another vehicle, a mobile terminal or a server.

The communication apparatus 400 may perform the communication by including at least one of a transmitting antenna, a receiving antenna, and radio frequency (RF) circuit and RF device for implementing various communication protocols.

The communication apparatus 400 may include a short-range communication unit 410, a location information unit 420, a V2X communication unit 430, an optical communication unit 440, a broadcast transceiver 450 and a processor 470.

According to an embodiment, the communication apparatus 400 may further include other components in addition to the components described, or may not include some of the components described.

The short-range communication unit 410 is a unit for facilitating short-range communications. Suitable technologies for implementing such short-range communications include BLUETOOTHTM, Radio Frequency IDentification (RFID), Infrared Data Association (IrDA), Ultra-WideBand (UWB), ZigBee, Near Field Communication (NFC), Wireless-Fidelity (Wi-Fi), Wi-Fi Direct, Wireless USB (Wireless Universal Serial Bus), and the like.

The short-range communication unit 410 may construct short-range area networks to perform short-range communication between the vehicle 100 and at least one external device.

The location information unit 420 is a unit for acquiring position information. For example, the location information unit 420 may include a Global Positioning System (GPS) module or a Differential Global Positioning System (DGPS) module.

The V2X communication unit 430 is a unit for performing wireless communications with a server (vehicle to infrastructure; V2I), another vehicle (vehicle to vehicle; V2V), or a pedestrian (vehicle to pedestrian; V2P). The V2X communication unit 430 may include an RF circuit capable of implementing a communication protocol with an infrastructure (V2I), a communication protocol between vehicles (V2V) and a communication protocol with a pedestrian (V2P).

The optical communication unit 440 is a unit for performing communication with an external device through the medium of light. The optical communication unit 440 may include an optical transmission part for converting an electric signal into an optical signal and transmitting the optical signal to the outside, and an optical reception part for converting the received optical signal into the electric signal.

According to an embodiment, the optical transmission part may be formed integrally with lamps provided on the vehicle 100.

The broadcast transceiver 450 is a unit for receiving a broadcast signal from an external broadcast managing entity or transmitting a broadcast signal to the broadcast managing entity via a broadcast channel. The broadcast channel may include a satellite channel, a terrestrial channel, or both. The broadcast signal may include a TV broadcast signal, a radio broadcast signal, and a data broadcast signal.

The processor 470 may control an overall operation of each unit of the communication apparatus 400.

According to an embodiment, the communication apparatus 400 may include a plurality of processors 470 or may not include any processor 470.

When the processor 470 is not included in the communication apparatus 400, the communication apparatus 400 may operate according to the control of a processor of another device within the vehicle 100 or the controller 170.

Meanwhile, the communication apparatus 400 may implement a display device for a vehicle together with the user interface apparatus 200. In this instance, the display device for the vehicle may be referred to as a telematics apparatus or an Audio Video Navigation (AVN) apparatus.

The communication apparatus 400 may operate according to the control of the controller 170.

The driving control apparatus 500 is an apparatus for receiving a user input for driving.

In a manual mode, the vehicle 100 may be operated based on a signal provided by the driving control apparatus 500.

The driving control apparatus 500 may include a steering input device 510, an acceleration input device 530 and a brake input device 570.

The steering input apparatus 510 may receive an input regarding a driving (ongoing) direction of the vehicle 100 from the user. The steering input apparatus 510 is preferably configured in the form of a wheel allowing a steering input in a rotating manner. According to some embodiments, the steering input apparatus may also be configured in a shape of a touch screen, a touchpad, or a button.

The acceleration input apparatus 530 may receive an input for accelerating the vehicle 100 from the user. The brake input apparatus 570 may receive an input for braking the vehicle 100 from the user. Each of the acceleration input apparatus 530 and the brake input apparatus 570 is preferably configured in the form of a pedal. According to some embodiments, the acceleration input apparatus or the brake input apparatus may also be configured in the form of a touch screen, a touch pad or a button.

The driving control apparatus 500 may operate according to the control of the controller 170.

The vehicle operating apparatus 600 is an apparatus for electrically controlling operations of various devices within the vehicle 100.

The vehicle operating apparatus 600 may include a power train operating unit 610, a chassis operating unit 620, a door/window operating unit 630, a safety apparatus operating unit 640, a lamp operating unit 650, and an air-conditioner operating unit 660.

According to an embodiment, the communication apparatus 600 may further include other components in addition to the components described, or may not include some of the components described.

In some examples, the vehicle operating apparatus 600 may include a processor. Each unit of the vehicle operating apparatus 600 may individually include a processor.

The power train operating unit 610 may control an operation of a power train apparatus.

The power train operating unit 610 may include a power source operating portion 611 and a gearbox operating portion 612.

The power source operating portion 611 may perform a control for a power source of the vehicle 100.

For example, upon using a fossil fuel-based engine as the power source, the power source operating portion 611 may perform an electronic control for the engine. Accordingly, an output torque and the like of the engine can be controlled. The power source operating portion 611 may adjust the engine output torque according to the control of the controller 170.

For example, upon using an electric energy-based motor as the power source, the power source operating portion 611 may perform a control for the motor. The power source operating portion 611 may adjust a rotating speed, a torque and the like of the motor according to the control of the controller 170.

The gearbox operating portion 612 may perform a control for a gearbox.

The gearbox operating portion 612 may adjust a state of the gearbox. The gearbox operating portion 612 may change the state of the gearbox into drive (forward) (D), reverse (R), neutral (N) or parking (P).

Meanwhile, when an engine is the power source, the gearbox operating portion 612 may adjust a locked state of a gear in the drive (D) state.

The chassis operating unit 620 may control an operation of a chassis apparatus.

The chassis operating unit 620 may include a steering operating portion 621, a brake operating portion 622 and a suspension operating portion 623.

The steering operating portion 621 may perform an electronic control for a steering apparatus within the vehicle 100. The steering operating portion 621 may change a driving direction of the vehicle.

The brake operating portion 622 may perform an electronic control for a brake apparatus within the vehicle 100. For example, the brake operating portion 622 may control an operation of brakes provided at wheels to reduce speed of the vehicle 100.

Meanwhile, the brake operating portion 622 may individually control each of a plurality of brakes. The brake operating portion 622 may differently control braking force applied to each of a plurality of wheels.

The suspension operating portion 623 may perform an electronic control for a suspension apparatus within the vehicle 100. For example, the suspension operating portion 623 may control the suspension apparatus to reduce vibration of the vehicle 100 when a bump is present on a road.

Meanwhile, the suspension operating portion 623 may individually control each of a plurality of suspensions.

The door/window operating unit 630 may perform an electronic control for a door apparatus or a window apparatus within the vehicle 100.

The door/window operating unit 630 may include a door operating portion 631 and a window operating portion 632.

The door operating portion 631 may perform the control for the door apparatus. The door operating portion 631 may control opening or closing of a plurality of doors of the vehicle 100. The door operating portion 631 may control opening or closing of a trunk or a tail gate. The door operating portion 631 may control opening or closing of a sunroof.

The window operating portion 632 may perform the electronic control for the window apparatus. The window operating portion 632 may control opening or closing of a plurality of windows of the vehicle 100.

The safety apparatus operating unit 640 may perform an electronic control for various safety apparatuses within the vehicle 100.

The safety apparatus operating unit 640 may include an airbag operating portion 641, a seatbelt operating portion 642 and a pedestrian protecting apparatus operating portion 643.

The airbag operating portion 641 may perform an electronic control for an airbag apparatus within the vehicle 100. For example, the airbag operating portion 641 may control the airbag to be deployed upon a detection of a risk.

The seatbelt operating portion 642 may perform an electronic control for a seatbelt apparatus within the vehicle 100. For example, the seatbelt operating portion 642 may control passengers to be motionlessly seated in seats 110FL, 110FR, 110RL, 110RR using seatbelts upon a detection of a risk.

The pedestrian protection apparatus operating portion 643 may perform an electronic control for a hood lift and a pedestrian airbag. For example, the pedestrian protection apparatus operating portion 643 may control the hood lift and the pedestrian airbag to be open up upon detecting pedestrian collision.

The lamp operating portion 650 may perform an electronic control for various lamp apparatuses within the vehicle 100.

The air-conditioner operating unit 660 may perform an electronic control for an air conditioner within the vehicle 100. For example, the air-conditioner operating unit 660 may control the air conditioner to supply cold air into the vehicle when internal temperature of the vehicle is high.

The vehicle operating apparatus 600 may include a processor. Each unit of the vehicle operating apparatus 600 may individually include a processor.

The vehicle operation device 600 may operate according to the control of the controller 170.

The operation system 700 is a system that controls various driving modes of the vehicle 100. The operation system 700 may be operated in the autonomous driving mode.

The operation system 700 may include a driving system 710, a parking exit system 740 and a parking system 750.

According to an embodiment, the communication apparatus 700 may further include other components in addition to the components described, or may not include some of the components described.

Meanwhile, the operation system 700 may include a processor. Each unit of the operation system 700 may individually include at least one processor.

According to embodiments, the operation system may be a sub concept of the controller 170 when it is implemented in a software configuration.

Meanwhile, according to embodiment, the operation system 700 may be a concept including at least one of the user interface apparatus 200, the object detecting apparatus 300, the communication apparatus 400, the vehicle operating apparatus 600, and the controller 170.

The driving system 710 may perform driving of the vehicle 100.

The driving system 710 may receive navigation information from a navigation system 770, transmit a control signal to the vehicle operating apparatus 600, and perform driving of the vehicle 100.

The driving system 710 may receive object information from the object detecting apparatus 300, transmit a control signal to the vehicle operating apparatus 600 and perform driving of the vehicle 100.

The driving system 710 may receive a signal from an external device through the communication apparatus 400, transmit a control signal to the vehicle operating apparatus 600, and perform driving of the vehicle 100.

The parking exit system 740 may perform an exit of the vehicle 100 from a parking lot.

The parking exit system 740 may receive navigation information from the navigation system 770, transmit a control signal to the vehicle operating apparatus 600, and perform the exit of the vehicle 100 from the parking lot.

The parking exit system 740 may receive object information from the object detecting apparatus 300, transmit a control signal to the vehicle operating apparatus 600 and perform the exit of the vehicle 100 from the parking lot.

The parking exit system 740 may receive a signal from an external device through the communication apparatus 400, transmit a control signal to the vehicle operating apparatus 600, and perform the exit of the vehicle 100 from the parking lot.

The parking system 750 may perform parking of the vehicle 100.

The parking system 750 may receive navigation information from the navigation system 770, transmit a control signal to the vehicle operating apparatus 600, and park the vehicle 100.

The parking system 750 may receive object information from the object detecting apparatus 300, transmit a control signal to the vehicle operating apparatus 600 and park the vehicle 100.

The parking system 750 may receive a signal from an external device through the communication apparatus 400, transmit a control signal to the vehicle operating apparatus 600, and park the vehicle 100.

The navigation system 770 may provide navigation information. The navigation information may include at least one of map information, information regarding a set destination, path information according to the set destination, information regarding various objects on a path, lane information and current location information of the vehicle.

The navigation system 770 may include a memory and a processor. The memory may store the navigation information. The processor may control an operation of the navigation system 770.

According to embodiments, the navigation system 770 may update pre-stored information by receiving information from an external device through the communication apparatus 400.

According to embodiments, the navigation system 770 may be classified as a sub component of the user interface apparatus 200.

The sensing unit 120 may sense a status of the vehicle. The sensing unit 120 may include a posture sensor (e.g., a yaw sensor, a roll sensor, a pitch sensor, etc.), a collision sensor, a wheel sensor, a speed sensor, a tilt sensor, a weight-detecting sensor, a heading sensor, a gyro sensor, a position module, a vehicle forward/backward movement sensor, a battery sensor, a fuel sensor, a tire sensor, a steering sensor by a turn of a handle, a vehicle internal temperature sensor, a vehicle internal humidity sensor, an ultrasonic sensor, an illumination sensor, an accelerator position sensor, a brake pedal position sensor, and the like.

The sensing unit 120 may acquire sensing signals with respect to vehicle-related information, such as a pose, a collision, an orientation, a position (GPS information), an angle, a speed, an acceleration, a tilt, a forward/backward movement, a battery, a fuel, tires, lamps, internal temperature, internal humidity, a rotated angle of a steering wheel, external illumination, pressure applied to an accelerator, pressure applied to a brake pedal and the like.

The sensing unit 120 may further include an accelerator sensor, a pressure sensor, an engine speed sensor, an air flow sensor (AFS), an air temperature sensor (ATS), a water temperature sensor (WTS), a throttle position sensor (TPS), a TDC sensor, a crank angle sensor (CAS), and the like.

The interface unit 130 may serve as a path allowing the vehicle 100 to interface with various types of external devices connected thereto. For example, the interface unit 130 may be provided with a port connectable with a mobile terminal, and connected to the mobile terminal through the port. In this instance, the interface unit 130 may exchange data with the mobile terminal.

In some examples, the interface unit 130 may serve as a path for supplying electric energy to the connected mobile terminal. When the mobile terminal is electrically connected to the interface unit 130, the interface unit 130 supplies electric energy supplied from a power supply unit 190 to the mobile terminal according to the control of the controller 170.

The memory 140 is electrically connected to the controller 170. The memory 140 may store basic data for units, control data for controlling operations of units and input/output data. The memory 140 may be various storage apparatuses such as a ROM, a RAM, an EPROM, a flash drive, a hard drive, and the like in terms of hardware. The memory 140 may store various data for overall operations of the vehicle 100, such as programs for processing or controlling the controller 170.

According to embodiments, the memory 140 may be integrated with the controller 170 or implemented as a sub component of the controller 170.

The controller 170 may control an overall operation of each unit of the vehicle 100. The controller 170 may be referred to as an Electronic Control Unit (ECU).

The power supply unit 190 may supply power for an operation of each element according to the control of the controller 170. Specifically, the power supply unit 190 may receive power supplied from an internal battery of the vehicle, and the like.

At least one processor and the controller 170 included in the vehicle 100 may be implemented using at least one of application specific integrated circuits (ASICs), digital signal processors (DSPs), digital signal processing devices (DSPDs), programmable logic devices (PLDs), field programmable gate arrays (FPGAs), processors, controllers, micro controllers, microprocessors, and electric units performing other functions.

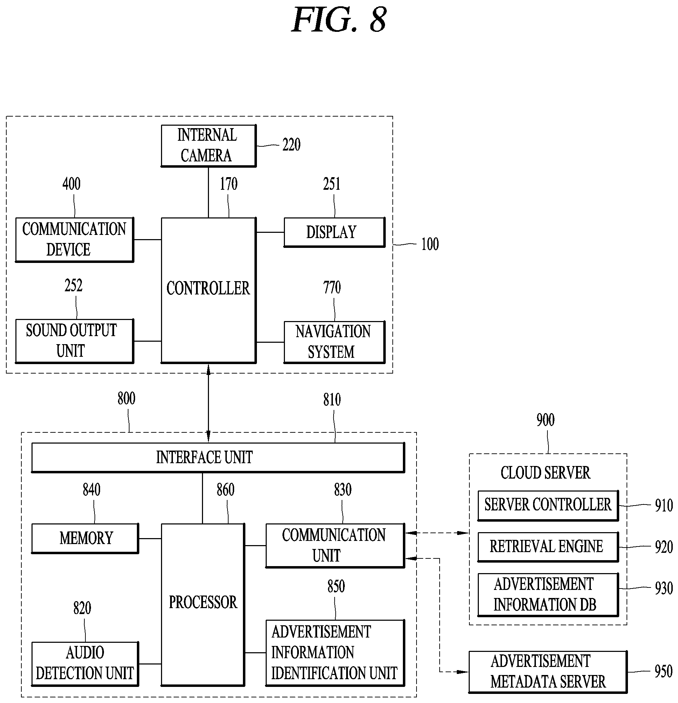

FIG. 8 is a block diagram illustrating a structure of an advertisement information provision device 800 according to an embodiment of the present disclosure.

Referring to FIG. 8, the advertisement information provision device 800 according to an embodiment of the present disclosure may include a processor 860, and an interface unit 810, a communication unit 830, an audio detection unit 820, and a memory 840, which are connected to the processor 860 and controlled by the processor 860. In addition, the advertisement information provision device 800 may also include an advertisement information identification unit 850. In addition, the advertisement information provision device 800 may be disposed to be mounted or installed in the vehicle 100, and may be implemented as an integral part with the vehicle 100. When implemented as an integral part of the vehicle 100, the processor 860 may be the controller 170 of the vehicle 100, and each element of the advertisement information provision device 800 connected to the processor 860 may be an element provided in the vehicle 100.

The communication unit 830 may be configured to perform wireless communication with an electrical component disposed in the vehicle, for example, a peripheral device (e.g., a mobile terminal) disposed inside the vehicle, or at least one of the vehicle electrical components described in FIG. 7.

In addition, the communication unit 830 may be configured to communicate with a preset server or an infrastructure installed on a road. Here, the preset server may include a cloud server 900 that provides advertisement information or an advertisement metadata server 950 that provides an audio advertisement and advertisement information corresponding to the audio advertisement.

The communication unit 830 may be the communication device 400 described above, and may include at least one of those components included in the communication device 400.

The interface unit 810 may perform communication with at least one of the components disposed in the vehicle.

Specifically, the interface unit 810 may perform wired communication with at least one of the electrical components included in the vehicle illustrated in FIG. 7.

Specifically, the interface unit 810 receives sensing information from one or more sensors disposed in the vehicle 100.

In some cases, the interface unit 810 may be referred to as a sensor data collector.

The interface unit 810 collects (receives) information sensed by sensors (V.Sensors) disposed at the vehicle for detecting a manipulation of the vehicle (e.g., heading, throttle, break, wheel, etc.) and sensors (S.Sensors) for detecting surrounding information of the vehicle (e.g., Camera, Radar, LiDAR, Sonar, etc.)

The interface unit 810 may transmit the information sensed through the sensors disposed at the vehicle to the communication unit 830 (or a processor 860) so that the information is reflected in the HD map. Furthermore, the interface unit 810 may exchange data with the interface unit 130 of the vehicle.

The interface unit 810 may serve as a path with the electrical components disposed in the vehicle through the interface unit 130 of the vehicle.

For example, the processor 860 may be connected to the controller 170 of the vehicle 100 through the interface unit 810, and may control each element connected to the controller 170 by controlling the controller 170. Accordingly, as shown in FIG. 8, data items provided from the communication device 400, the sound output unit 252, the internal camera 220, the display 251, and the navigation system 770 of the vehicle 100 may be received by the processor 860 through the interface unit 810, and control data items according to the control of the processor 860 may be applied to each of the elements through the interface unit 810.

That is, the processor 860 may be connected to the controller 170 of the vehicle 100 through the interface unit 810, and may control each element (each electrical component) of the vehicle 100 controlled by the controller 170 through the controller 170.

In addition, the interface unit 810 may be connected to the vehicle 100 to serve as a path for receiving electrical energy. Accordingly, the advertisement information provision device 800 may receive electric energy from the vehicle's power supply unit 190 through the interface unit 810 to turn on power.

Meanwhile, the audio detection unit 820 may collect audio information according to a sound signal output from the sound output unit 252 of the vehicle 100. For example, the audio detection unit 820 may receive sound data items input into a buffer (audio buffer) to be output through a speaker provided in the sound output unit 252. Furthermore, the received sound data items may be collected as audio information according to the sound signal output from the sound output unit. In this case, the sound data items stored in the audio buffer may be pulse code modulation (PCM) data items to be converted into an analog signal (sound signal) by the sound output unit 252. Therefore, the audio information items collected by the audio detection unit 820 may be the PCM data items.

Here, the audio detection unit 820 may extract features from the collected audio information items. For example, a different sound signal may have a different melodic or harmonic combination. Therefore, the melodic or harmonic combination may be a feature of the sound signal. Furthermore, the feature of the acoustic signal, which is unique to each sound signal, may be used as a fingerprint corresponding to the sound signal. That is, the collected audio information items may be used as audio fingerprint information corresponding to the sound signal.

Meanwhile, the PCM data may be directly converted into sound information when converted into an analog signal. Therefore, when the user's personal information is output through the sound output unit, such as during a phone call using the user's car phone, the user's personal information may be collected as audio information. Furthermore, when the collected audio information is used to collect advertisement information, there is a problem in that the user's personal information included in the audio information may be exposed.

In order to prevent the user's personal information from being exposed, the audio detection unit 820 may extract and collect only feature information from the collected audio information. As an example, the audio detection unit 820 may detect patterns of audio information items, that is, PCM data items, as feature information of the audio information. In this case, the pattern information of the detected PCM data items may be fingerprint information corresponding to the sound signal.

Meanwhile, the audio detection unit 820 may further collect information on an audio-related application operated by the controller 170. Here, the information of the audio-related application may be media (e.g., broadcast program) and audio channel information related to the output sound signal. That is, the audio detection unit 820 may collect audio information and at the same time collect information on broadcast programs and channels related to the collected audio information items.

Additionally, the audio detection unit 820 may further collect information on times at which audio information items are collected. In this case, times at which the audio information items are collected may be times at which a sound signal related to the audio information items is output from the sound output unit 252.

Here, information on broadcast programs and audio channels collected from the audio detection unit 820, as well as visual information, may be used to retrieve more accurate advertisement information corresponding to the collected audio information.

Furthermore, the memory 840 stores data that support various functions of the advertisement information provision device 800. The memory 840 may store a plurality of application programs or applications operated by the advertisement information provision device 800 and data items or instructions for operating the advertisement information provision device 800. For example, the memory 840 may store collected audio information items. Furthermore, data and instructions for detecting audio fingerprint information from the collected audio information may be stored. In addition, when the audio fingerprint information is detected, the detected audio fingerprint information may be stored, and when advertisement information is received from the cloud server 900 based on the audio fingerprint information, the received advertisement information may be stored.

Meanwhile, the present disclosure may include a processor 860 that controls each element of the advertisement information provision device 800 connected thereto, and controls an overall operation of the advertisement information provision device 800. The processor 860 may first collect audio information items corresponding to a sound signal output from the sound output unit 252 of the vehicle 100 through the interface unit 810. Furthermore, the communication unit 830 may be controlled to detect audio fingerprint information from the collected audio information items and transmit the detected audio fingerprint information to a preset server.

Here, the cloud server 900 may be a server that retrieves an advertisement corresponding to audio fingerprint information provided from the advertisement information provision device 800 and provides advertisement information corresponding to the retrieved advertisement. To this end, the cloud server 900 may include an advertisement information database (DB) 930 including advertisement information items respectively corresponding to a plurality of audio advertisements and audio fingerprint information items corresponding to the respective audio advertisements, a retrieval engine 920 for retrieving advertisement information corresponding to the audio fingerprint information from the advertisement information database 930, and a server controller 910 that receives audio fingerprint information from the communication unit 830 of the advertisement information provision device 800 and controls the retrieval engine 920 to retrieve advertisement information corresponding to the received audio fingerprint information from the advertisement information database 930. In addition, the cloud server 900 may include a communication unit (not shown) for performing a communication connection with the advertisement information provision device 800.

Here, advertisement information stored in the advertisement information database 930 may be information including a service corresponding to an audio advertisement, a name of a store or business providing the service, and location information of the store or business. In this case, the advertisement information may be information including a graphic object displayed on the display 251 of the vehicle 100, and may be point-of-interest (POI) information including a service corresponding to the audio advertisement and the name and location information of the store or business providing the service.

That is, when audio fingerprint information is received from the advertisement information provision device 800 mounted on the vehicle 100, the cloud server 900 may retrieve audio advertisement information corresponding to the collected audio fingerprint information, and retrieve POI information corresponding to the retrieved audio advertisement information as advertisement information corresponding to the audio fingerprint information. Furthermore, the retrieved POI information may be transmitted to the advertisement information provision device 800 as a response to the transmitted audio fingerprint information.

Then, the processor 860 of the advertisement information provision device 800 may control the interface unit 810 to output the POI information received in response to the audio fingerprint information to the display 251 of the vehicle 100. In this case, the processor 860 may control the interface unit 810 to output the POI information when a preset condition is met.

For example, the processor 860 may output the POI information based on information provided from the navigation system 770. In this case, the information provided from the navigation system 770 may be preset path information to a destination. That is, the processor 860 may extract POI information items corresponding to at least one store or shop located around the driving path of the vehicle 100 set to the destination from among the POI information items received in response to the transmitted audio fingerprint information, and output the extracted POI information items through the display 251. Accordingly, POI information corresponding to a sound signal output through the sound output unit 252 may be output.

Alternatively, the processor 860 may output the POI information based on a result of detecting a passenger. As an example, when the detected passenger is a female, POI information corresponding to an audio advertisement targeting a male may not be extracted.

Here, the passenger may include not only a driver, but also all passengers riding in a boarding space, such as a passenger room of the vehicle 100, that is, a cabin. As an example, each passenger seated in the cabin may be detected through the internal camera 220 provided in the vehicle 100. Furthermore, based on a result detected by the internal camera 220, the processor 860 may classify passengers seated in respective seats of the cabin according to the seat, and identify the passenger for each seat. Furthermore, the processor 860 may control the interface unit 810 to display different POI information on the display 251 corresponding to each seat according to a result of identifying each passenger. Therefore, customized POI information items may be provided to respective passengers seated in respective seats. In this case, the display 251 corresponding to each seat may be displays disposed on a rear surface of a seat in front of that seat.

Additionally, the preset condition may be a validity period set in the POI information. For example, the processor 860 may store POI information items transmitted from the cloud server 900. Furthermore, for POI information items with validity periods set from among the stored POI information items, the validity period may be compared with a current date and time to detect POI information items whose validity periods have expired. In addition, by deleting POI information items whose validity periods have expired, the interface unit 810 may be controlled to display only POI information items whose validity periods have not expired through the display 251.

Additionally, the processor 860 may transmit advertisement information, that is, POI information, stored in the memory 840 to a preset mobile terminal according to the user's request. Here, the mobile terminal may be a terminal that is preset to be connected to the vehicle 100. For example, the mobile terminal may include a mobile phone, a smart phone, a laptop computer, a personal digital assistant (PDA), a portable multimedia player (PMP), a navigator, a slate PC, a tablet PC, an ultrabook, a wearable device (e.g., a smart watch, smart glasses, a head mounted display (HMD)), or the like.

The mobile terminal may be connected to the vehicle 100 through the communication device 400. Furthermore, various information items of the vehicle 100 provided from the controller 170 of the vehicle 100 may be displayed. In this case, the processor 860 may be connected to the vehicle controller 170 through the interface unit 810 to transmit advertisement information, that is, POI information, stored in the memory 840 to the mobile terminal. Then, the mobile terminal that receives POI information through the controller 170 and communication device 400 may display the received POI information.

Meanwhile, the communication unit 830 may be connected to the advertisement metadata server 950 under the control of the processor 860 when a preset condition is met. The advertisement metadata server 950 may be an advertiser's server that provides advertisement information to the cloud server 900. Furthermore, when a preset condition is satisfied, such as when the user's input for POI information displayed through the mobile terminal or the display 251 is applied, or when a driving path passing through a store corresponding to specific POI information is set, the processor 860 may transmit advertisement inflow information to the advertisement metadata server 950 corresponding to the specific POI information.

Here, the advertisement inflow information, which is information indicating whether the user has been flowed into the advertisement, may be information to notify that the user selected POI information, such as a number of clicks. Accordingly, the advertisement metadata server 950 may check whether the user has selected an advertisement, that is, whether there is an advertisement inflow based on advertisement inflow information collected through the communication unit 830, which may be calculated as an advertisement effect of the broadcast audio advertisement. That is, visible and clear data on the effectiveness of audio advertising may be collected.

Meanwhile, the advertisement information provision device 800 according to an embodiment of the present disclosure may transmit collected audio information (or audio fingerprint information) to the cloud server 900, and the cloud server 900 may determine whether the transmitted audio information is an audio advertisement, and provide, when the determined audio information is an audio advertisement, advertisement information corresponding thereto, that is, POI information, to the advertisement information provision device 800. However, in this case, since the cloud server 900 determines whether a sound signal output from the sound output unit 252 is an audio advertisement, there is a problem in that the advertisement information provision device 800 must continuously provide audio information on the sound signal output from the sound output unit 252 to the cloud server 900. Therefore, there is a problem in that the cloud server 900 and the advertisement information provision device 800 must always be connected to each other, and the cloud server 900 must also always receive audio information provided from the vehicle 100 to determine whether the audio information is an audio advertisement, and thus there is a problem in that communication data between the vehicle 100 and the cloud server 900 increases unnecessarily, and a load on the cloud server 900 increases.

In order to solve the problem, the advertisement information provision device 800 according to an embodiment of the present disclosure may further include an advertisement information identification unit 850 for independently identifying whether the collected audio information is an audio advertisement.

In this case, the advertisement information identification unit 850 may compare the collected audio information, for example, audio fingerprint information, with features corresponding to a plurality of different audio advertisements stored in advance to determine whether the collected audio information is an audio advertisement. In this case, an audio advertisement corresponding to audio information collected as a result of the determination of the advertisement information identification unit 850 may be identified simultaneously with the determination.

Here, the advertisement information identification unit 850 may be a separate configuration from the processor 860 as shown in FIG. 8, but may also be implemented as an integral part with the processor 860.

Based on a result of identifying an audio advertisement by the advertisement information identification unit 850, the processor 860 may request advertisement information corresponding to a specific audio advertisement from the cloud server 900. Then, since the cloud server 900 only transmits advertisement information on the requested audio advertisement to the cloud server 900, a load on the cloud server 900 may be significantly reduced. In addition, since the advertisement information provision device 800 is connected to the cloud server 900 only when necessary (when requesting advertisement information), an amount of wireless data exchanged between the cloud server 900 and the advertisement information provision device 800 may be significantly reduced. In addition, since data is transmitted to the cloud server 900 only for audio information identified as an audio advertisement, data other than the audio advertisement, such as the user's call information output through a speaker of the vehicle 100, may be prevented from being leaked outside the vehicle 100. Therefore, it has an effect of preventing the user's personal information from being leaked to the outside.

To this end, the memory 840 may further include comparison data for identifying an audio advertisement in the advertisement information identification unit 850. Here, the comparison data may be audio fingerprint information on a plurality of different audio advertisements. For example, when the audio fingerprint information collected by the audio detection unit 820 is PCM data for a predetermined period of time, the comparison data may be PCM data items for a predetermined period of time for a respective plurality of different audio advertisements. Alternatively, when the audio fingerprint information collected by the audio detection unit 820 is pattern information on the collected PCM data samples, the comparison data may be pattern information items on PCM data samples for a respective plurality of different audio advertisements. That is, the comparison data may be audio fingerprint information on a plurality of different audio advertisements.

Here, the comparison data may be updated by the cloud server 900. As an example, the comparison data stored in the memory 840 may be updated to correspond to a latest audio advertisement according to a preset cycle.

Alternatively, when advertisement information and audio fingerprint information corresponding to a new audio advertisement are added to the advertisement information DB 930, the cloud server 900 may transmit fingerprint information on the added audio advertisement as update data to the advertisement information provision device 800. Furthermore, the memory 840 may update previously stored comparison data based on the update data. Accordingly, the memory 840 may delete audio fingerprint information items corresponding to old audio advertisements whose validity periods have expired, and update the comparison data to include audio fingerprint information corresponding to a newly added latest audio advertisement.

Meanwhile, the comparison data stored in the memory 840 may be audio fingerprint information items on audio advertisements collected according to the user's preference. As an example, information on places the user frequently visits may be collected based on information items collected from the user's wearable terminal or mobile terminal. Furthermore, based on the collected information items, the user's preferred places may be collected. In this case, audio fingerprint information items of audio advertisements related to the user preferred places may be stored in the memory 840 as the comparison data.

For such user preference advertisement learning, the processor 860 may further include an artificial intelligence module (not shown). Furthermore, the memory 840 may store data items for an operation of the artificial intelligence module (e.g., information on at least one algorithm for machine learning, etc.).

Meanwhile, the artificial intelligence module, which performs a role of processing information items based on an artificial intelligence technology, may include at least one module that performs at least one of learning of information, inference of information, perception of information, and processing of a natural language.

The artificial intelligence module may perform at least one of learning, inferring, and processing a vast amount of information (big data), such as information stored in the memory 840, and information stored in a communicable external storage using a machine learning technology. Here, the machine learning is a technology that collects and learns large amounts of information based on at least one algorithm, and determines and predicts information based on the learned information, and the learning of information may denote identifying the features, rules, and determination criteria of the information items, quantifying a relationship between information, and predicting new data items using the quantified patterns.

Algorithms used by the machine learning technology may be algorithms based on statistics, for example, a decision tree that uses a tree structure type as a prediction model, an artificial neural network that mimics neural network structures and functions of living creatures, genetic programming based on biological evolutionary algorithms, clustering of distributing observed examples to a subset of clusters, a Monte Carlo method of computing function values as probability using randomly-extracted random numbers, and the like.

As one field of the machine learning technology, deep learning is a technology of performing at least one of learning, determining, and processing information items using the artificial neural network algorithm. The artificial neural network may have a structure of linking layers and transferring data between the layers. The deep learning technology may be employed to learn vast amounts of information through the artificial neural network using a CPU (e.g., graphic processing unit (GPU)) optimized for parallel computing.

Meanwhile, when the user's preferred place is learned through the artificial intelligence module, an audio advertisement corresponding to the learned user's preferred place may be detected. As an example, the processor 860 may transmit quantified data to the cloud server 900 according to the user's preferred place. Furthermore, an audio advertisement corresponding to the transmitted quantified data and audio fingerprint information corresponding to the audio advertisement may be provided from the cloud server 900.

As an example, when a user frequently visits a hamburger franchise store, the processor 860 may learn through learning of an artificial intelligence module that the user's preferred place is a hamburger franchise store, and may extract a 'hamburger', the main menu of the franchise store frequently visited by the user, as quantified data based on a result of the learning. Then, the processor 860 may transmit the extracted quantified data 'hamburger' to the cloud server 900, and the cloud server 900 may retrieve audio advertisements corresponding to the quantified data 'hamburger' transmitted from the processor 860 from the advertisement information DB 930. Furthermore, audio fingerprint information items of audio advertisements retrieved in the retrieval result may be transmitted to the advertisement information provision device 800 in response to the received quantified data.

In this case, the cloud server 900 may provide audio fingerprint information items retrieved for the quantified data 'hamburger' to the advertisement information provision device 800, and thus audio fingerprint information of audio advertisements for other hamburger franchises in addition to a hamburger franchise store frequently visited by the user, and audio fingerprint information items for a similar product retrieved for the 'hamburger', such as a sandwich, may be provided together as the comparison data. Accordingly, audio fingerprint information of not only a hamburger of a franchise store (e.g., King Donald Burger) frequently visited by the user, but also a hamburger of another franchise (e.g., ABC Burger) and audio fingerprint information items of sandwich audio advertisements may be stored as comparison data. Accordingly, when the ABC burger or sandwich advertisement is output from the sound output unit 252, advertisement information corresponding to the advertisement may be requested from the cloud server 900.

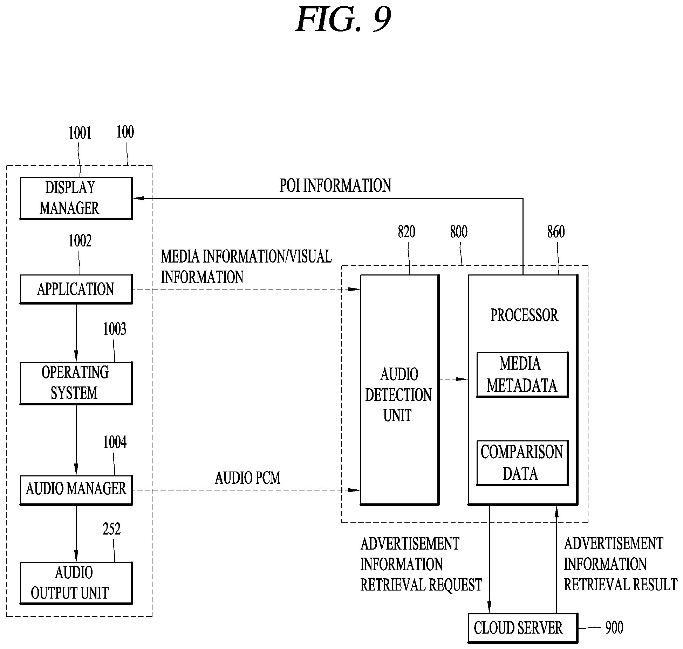

FIG. 9 is a conceptual diagram illustrating a flow of information items exchanged between the advertisement information provision device 800 and the vehicle 100 according to an embodiment of the present disclosure through the interface unit 810 as described above.

Referring to FIG. 9, first, the controller 170 of the vehicle 100 may operate an application 1002 related to an audio output according to a user's operation or request. As an example, the application 1002 may be an application that receives and outputs a radio broadcast signal (hereinafter referred to as a radio broadcast application).

Then, the controller 170 may provide information on the application 1002 being operated to the advertisement information provision device 800 through the interface unit 810. In this case, the information of the application 1002 may include information on media and information on a time at which the sound signal is output. Here, the information of the media may be information of a radio program broadcast in the radio broadcasting application. In this case, the information of the radio program may include information on a name of the program and a frequency of a radio channel on which it is broadcast. Additionally, information on a time at which the sound signal is output may be information on a time at which the radio program is broadcast. Furthermore, the media information and visual information may be input into the audio detection unit 820.

Meanwhile, an operating system 1003 of the vehicle 100 may be controlled according to an operation of the application 1002, and an audio manager 1004 may receive a radio broadcast signal from a tuned radio broadcast channel according to the control of the operating system 1003. Furthermore, in this case, the received audio broadcast signal may be PCM data as digitally modulated data, and the audio manager 1004 may demodulate the received PCM data and apply the demodulated PCM data to the sound output unit 252. Then, the sound output unit 252 may output a sound signal according to the demodulated PCM data.

In this case, the audio manager 1004 may store the received PCM data in an audio buffer for demodulation. Then, a copy of some of the PCM data stored in the audio buffer may be made, and the copied data, that is, some of the audio PCM data, may be input to the audio detection unit 820 through the interface unit 810.

Then, the audio detection unit 820 may extract audio fingerprint information from some of the input audio PCM data. As an example, the audio fingerprint information may be pattern information of the input audio PCM data. Furthermore, in this case, when the audio fingerprint information is pattern information, the audio fingerprint information may be formed into text information. Furthermore, the extracted audio fingerprint information and the media information and visual information may be provided to the processor 860.

Then, the processor 860 may determine whether some of the audio PCM data input to the audio detection unit 820 is part of an audio advertisement based on the previously stored audio fingerprint information, that is, the comparison data (e.g., advertisement information identification unit 850). Furthermore, in the case of an audio advertisement, an advertisement information retrieval request may be transmitted to the cloud server 900. Here, audio fingerprint information input from the audio detection unit 820 may be transmitted together with the advertisement information retrieval request. In this case, when some of the input audio PCM data is not part of an audio advertisement, the advertisement information identification unit 850 may not transmit a request for advertisement information to the cloud server 900.

Meanwhile, the cloud server 900 may transmit an advertisement information retrieval result corresponding to the audio fingerprint information in response to the request of the processor 860. Then, the processor 860 may receive advertisement information metadata in a preset format (e.g., JASON) and parse the received advertisement information retrieval result based on previously stored media metadata. Furthermore, advertisement information may be extracted. In this case, the advertisement information may be POI information.

Furthermore, the processor 860 may transmit the extracted advertisement information, that is, POI information, to a display manager 1001 of the vehicle 100 when a preset condition (a driving path, a passenger detection result, or a user preference, etc.) is met. Then, the display manager 1001 may control the display 251 to output the received POI information.

Hereinafter, embodiments related to a control method that can be implemented in the advertisement information provision device 800 having such a configuration will be described with reference to the accompanying drawings. It is obvious to those skilled in the art that the present disclosure can be embodied in other specific forms without departing from the concept and essential characteristics thereof.

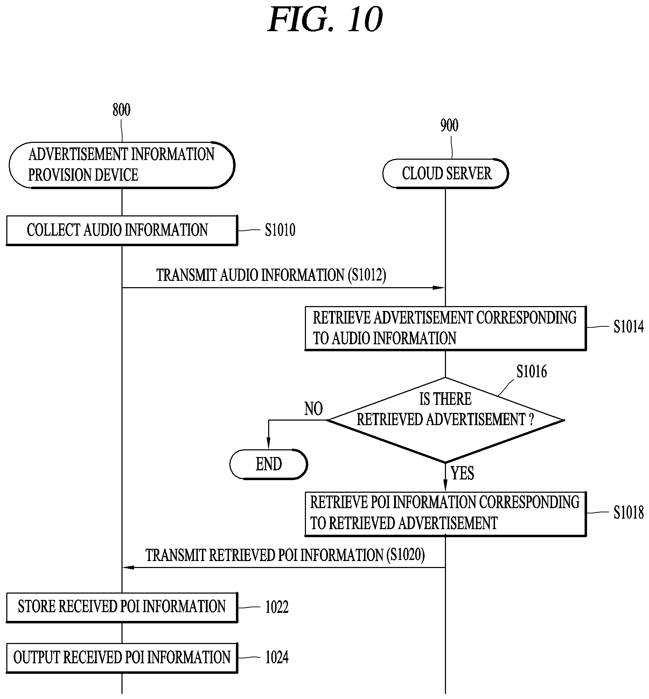

FIG. 10 is a flowchart illustrating an operation process in which advertisement information corresponding to audio information is provided between an advertisement information provision device and a cloud server according to an embodiment of the present disclosure.

Referring to FIG. 10, the advertisement information provision device 800 according to an embodiment of the present disclosure may first collect audio information (S1010). Here, the audio information, which is audio fingerprint information corresponding to a sound signal to be output from the sound output unit 252, may be PCM data as digitally modulated data stored in an audio buffer for demodulation in the sound output unit 252. Alternatively, the audio information may be pattern information of PCM data analyzed from the PCM data. In this case, the audio information may be text information.

When audio information is collected, the advertisement information provision device 800 may transmit the collected audio information to a preset cloud server 900 (S1012). In this case, the transmitted audio information may include the PCM data or pattern information. In addition, when audio information is collected, it may include visual information and media information that are collected together, such as a name of a radio broadcast program and frequency information of a radio broadcast channel on which it is broadcast.

The cloud server 900 may be a server preset to provide advertisement information in response to audio information provided from the advertisement information provision device 800 in the step S1012. That is, it may be a server including the advertisement information database 930 including advertisement information items corresponding to respective different audio advertisements and audio fingerprint information corresponding to each audio advertisement, and the retrieval engine 920. Furthermore, here, the advertisement information may be graphic information including a service corresponding to the audio advertisement and a name of a store or business providing the service, and POI information including the location information of the store or business.

Meanwhile, upon receiving audio information from the advertisement information provision device 800, when the cloud server 900 may retrieve an advertisement corresponding to the received audio information, that is, audio fingerprint information (S1014). Furthermore, whether there is an audio advertisement corresponding to the received audio fingerprint information may be checked (S1016). In this case, in order to retrieve a more accurate audio advertisement corresponding to audio fingerprint information, visual information and media information transmitted together with the audio information may be further utilized.

To this end, the cloud server 900 may include information on media broadcast at each time. Furthermore, based on the media (e.g., radio broadcast program, broadcast channel, and broadcast frequency) broadcast at a time collected together with the audio fingerprint information, an audio advertisement corresponding to the audio fingerprint information may be retrieved from among audio data items that have been broadcast during the broadcast of the media, for example, radio broadcast program.

As a result of the check in step S1016, when there is no audio advertisement corresponding to audio fingerprint information, or a combination of audio fingerprint information and visual information and media information, the cloud server 900 may end an operation of providing advertisement information without responding to the received audio information. Alternatively, a response message notifying that there is no audio advertisement corresponding to the audio information may be transmitted to the advertisement information provision device 800. In this case, the advertisement information provision device 800 may determine that the collected audio fingerprint information is not for an audio advertisement based on the reception of the response message.

On the contrary, when an audio advertisement corresponding to audio fingerprint information or a combination of audio fingerprint information and visual information and media information is retrieved as a result of the check in step S1016, the cloud server 900 may retrieve advertisement information corresponding to the retrieved audio advertisement, that is, POI information, from the advertisement information DB 930 (S1018). Furthermore, the retrieved POI information may be transmitted to the advertisement information provision device 800 in response to the audio information (audio fingerprint information) transmitted in the step S1012 (S1020).

Then, the advertisement information provision device 800 may store the POI information received from the cloud server 900 (S1022). Furthermore, the advertisement information provision device 800 may control the display 251 through the interface unit 810 to display the POI information on the display 251 (S1024). In this case, the processor 860 of the advertisement information provision device 800 may control the display 251 through the interface unit 810 so as to display the stored POI information on the display 251 only when a preset condition is satisfied.

Meanwhile, in a case such as FIG. 10, audio advertisements may be detected for all sound signals output from the sound output unit 252, and advertisement information corresponding to the detected audio advertisements may be retrieved. Therefore, the cloud server 900 determines whether the sound signal output from the sound output unit 252 is advertisement information. Accordingly, in a case such as FIG. 10, there is a problem in that a load on the cloud server 900 increases, and an amount of data exchanged between the advertisement information provision device 800 and the cloud server 900 increases.

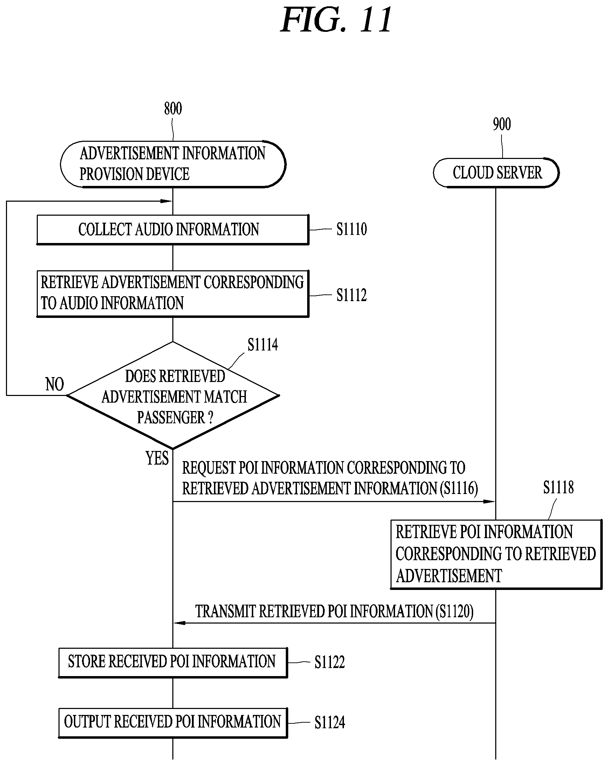

FIG. 11 is intended to solve the problem, which is a flowchart illustrating another operation process according to an embodiment of the present disclosure, in which the advertisement information provision device 800 according to an embodiment of the present disclosure determines whether there is an audio advertisement corresponding to collected audio information, and requests, when audio information corresponding to the audio advertisement is collected as a result of the determination, advertisement information corresponding to the collected audio information from the cloud server 900.

Referring to FIG. 11, the advertisement information provision device 800 according to an embodiment of the present disclosure may first collect audio information in the same manner as FIG. 10 (S1110). Here, the audio information may be PCM data as audio fingerprint information or text information (pattern information) including a pattern extracted from the PCM data.

When audio information is collected in the step S1110, the advertisement information provision device 800 may retrieve an audio advertisement corresponding to the collected audio information based on the comparison data stored in the memory 840 (S1112). Furthermore, as a result of the retrieval in step S1112, when there is no comparison data corresponding to the collected audio information, the processor 860 may determine that the collected audio information is not an audio advertisement for which advertisement information is to be requested. Therefore, the process may proceed to step S1110 again and control the audio detection unit 820 to collect audio information again from the audio buffer of the sound output unit 252.

However, as a result of the retrieval in step S1112, when there is comparison data corresponding to the collected audio information, that is, when an audio advertisement corresponding to the audio information is retrieved, the processor 860 may check whether the retrieved audio advertisement matches the passenger (S1114).

As an example, the processor 860 may compare, in step S1114, advertisement subjects determined based on a result of detecting the passenger with a subject of an audio advertisement retrieved based on the collected audio information. Here, a subject of the audio advertisement, which is determined by an audio advertisement retrieved in the step S1112, and when an audio advertisement matching the audio information collected in the step S1110 is retrieved, an advertisement subject corresponding to the retrieved audio advertisement may be detected.

Furthermore, when the subject of the detected audio advertisement is not included among the advertisement subjects determined based on the result of detecting the passenger, the processor 860 may determine that a currently detected audio advertisement subject does not match the passenger. Then, the process proceeds to step S1110 again and the audio detection unit 820 may be controlled to collect audio information again from the audio buffer of the sound output unit 252.

On the contrary, when the subject of the detected audio advertisement is included among the advertisement subjects determined based on the result of detecting the passenger, the processor 860 may determine that the subject of the detected audio advertisement matches the detected passenger. Accordingly, the processor 860 may request advertisement information corresponding to an audio advertisement corresponding to the collected audio information, for example, a specific audio advertisement corresponding to the comparison data from the cloud server 900 (S1116).

The cloud server 900 may be a server preset to provide advertisement information according to a request from the advertisement information provision device 800, as shown above in FIG. 10. That is, it may be a server including the advertisement information database 930 including advertisement information items corresponding to respective different audio advertisements and audio fingerprint information corresponding to each audio advertisement, and the retrieval engine 920. Furthermore, the advertisement information may be graphic information including a service corresponding to the audio advertisement and a name of a store or business providing the service, and POI information including the location information of the store or business.

Meanwhile, when a request for advertisement information on a specific audio advertisement is received in step S1116, the cloud server 900 may retrieve advertisement information corresponding to the specific audio advertisement from the advertisement information DB 930 (S1118).

Furthermore, the cloud server 900 may transmit the retrieved advertisement information, that is, POI information, to the advertisement information provision device 800 in response to the advertisement information request transmitted in the step S1116 (S1120).

Then, the advertisement information provision device 800 may store the POI information received from the cloud server 900 (S1122). Furthermore, the advertisement information provision device 800 may control the display 251 through the interface unit 810 to display the POI information on the display 251 (S1124). In this case, the processor 860 of the advertisement information provision device 800 may control the display 251 through the interface unit 810 so as to display the stored POI information on the display 251 only when a preset condition is satisfied.

Meanwhile, in the foregoing description, a configuration has been described in which the processor 860 directly retrieves a specific audio advertisement corresponding to the collected audio fingerprint information, and requests advertisement information of the retrieved specific audio advertisement from the cloud server 900. However, on the contrary, the processor 860 may of course only use a result of the check in the step S1114 to determine whether the collected audio fingerprint information is for an audio advertisement for which advertisement information is to be requested. In this case, as a result of the check in the step S1114, when there is comparison data corresponding to the audio fingerprint information, the processor 860 may of course also transmit the audio fingerprint information collected in the step S1110 as it is to the cloud server 900.

Then, the cloud server 900 may perform a process of retrieving an audio advertisement corresponding to the collected audio fingerprint information. That is, depending on the result of the check in the step S1114, the same process as the process subsequent to the step S1014 of FIG. 10 may also be carried out. However, even in this case, since whether there is an audio advertisement corresponding to the audio fingerprint information collected by the advertisement information provision device 800 is primarily filtered, a load on the cloud server 900 and an amount of data exchanged between the cloud server 900 and the advertisement information provision device 800 may be significantly reduced.

Meanwhile, according to the foregoing description, the advertisement information provision device 800 according to an embodiment of the present disclosure has described an example of collecting PCM data as audio information and media information and visual information.

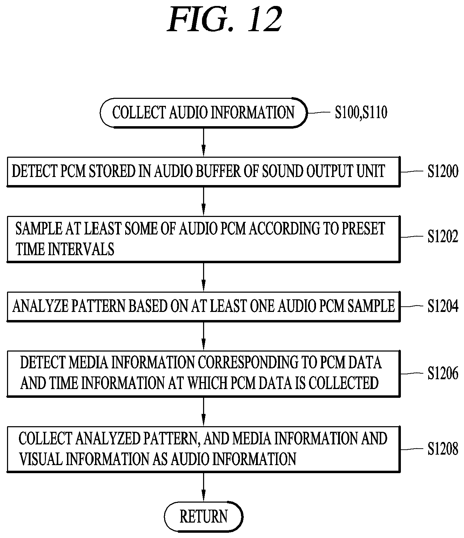

FIG. 12 is a flowchart more specifically illustrating an operation process of collecting the audio information by the advertisement information provision device 800 according to an embodiment of the present disclosure as described above.

Referring to FIG. 12, when collection of audio information starts in step S1010 of FIG. 10 or step S1110 of FIG. 11, the processor 860 may control the audio detection unit 820 to detect audio PCM data items stored in the audio buffer of the sound output unit 252 through the interface unit 810 (S1200). Furthermore, the detected audio PCM data items may be sampled at preset time intervals to generate samples for at least some of the audio PCM data items (S1202).

Furthermore, the processor 860 may analyze a pattern of the audio PCM data from the generated audio PCM data samples (S1204). For example, a pitch difference of each note, a harmony, and a melody change that constitutes a rhythm may be analyzed as a pattern of the PCM data, and the pattern may be analyzed as a unique feature of a sound signal having a unique rhythm, that is, audio fingerprint information. Moreover, in the case of an audio advertisement with a repeated unique melody to increase an advertisement inflow effect and advertisement awareness, the pattern of the PCM data may be different for each audio advertisement. Therefore, the pattern of the PCM data may be used as audio fingerprint information corresponding to each audio advertisement.

Meanwhile, the pattern of the PCM data may be data that cannot be demodulated because it is not PCM data. Therefore, it may be advantageous in that there is no leakage of the user's personal information, and a result of analyzing the samples obtained through the sampling may be transmitted in the form of text rather than audio data. Therefore, it has an advantage of significantly reducing a size of data.

Furthermore, the processor 860 may detect media information corresponding to the PCM data analyzed in the step S1204 and visual information from which the PCM data is collected (S1206). Here, the media information may include information on media corresponding to currently analyzed PCM data, that is, information on a currently broadcast radio broadcast program and a radio broadcast channel (e.g., a radio broadcast frequency). Additionally, a time at which the PCM data is collected may be information of a current time.

Furthermore, the processor 860 may generate text information including the analyzed pattern information and the media information and visual information collected in the step S1206. Then, the generated text information may be collected as audio information corresponding to a sound signal currently output from the sound output unit 252 (S1208). Therefore, when the collected audio information is transmitted to the cloud server 900, the pattern information analyzed in the step S1204 and the text information including the media information and visual information collected in the step S1206 may be transmitted to the cloud server 900.

Meanwhile, according to the foregoing description, it has been mentioned that the advertisement information provision device 800 according to an embodiment of the present disclosure can detect a passenger seated in a cabin and provide advertisement information matching the passenger based on the passenger detection result.

To this end, the processor 860 of the advertisement information provision device 800 may determine, as a result of the retrieval of the step S1112 in FIG. 11, when there is an audio advertisement matching the collected audio information, that there is a retrieved audio advertisement only when the matched audio advertisement detects the passenger seated in the cabin of the vehicle 100, and corresponds to a profile of the detected passenger. In this case, even when there is an audio advertisement matching the collected audio information, in a case where the audio advertisement does not match the profile of the detected passenger, the processor 860 may consider that the audio advertisement has not been retrieved and proceed to step S1110 of FIG. 11 again to collect audio information.

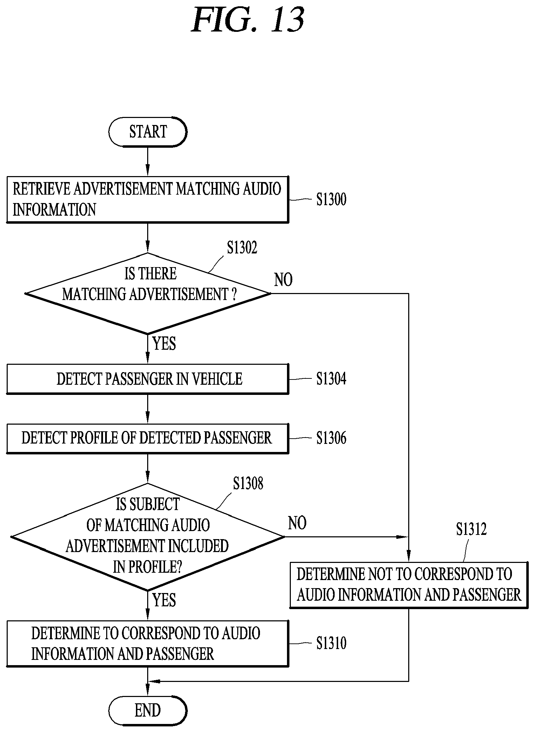

FIG. 13 is a flowchart illustrating an operation process of the advertisement information provision device 800 according to an embodiment of the present disclosure in such a case.

Referring to FIG. 13, the processor 860 of the advertisement information provision device 800 may first retrieve an audio advertisement matching the collected audio information (S1300). For example, the matching audio advertisement, which is an audio advertisement corresponding to one of audio fingerprint information items stored as comparison data in the memory 840, may be an audio advertisement having audio fingerprint information matching audio fingerprint information (e.g., PCM pattern information) included in the audio information currently collected by the audio detection unit 820.

As a result of the retrieval in the step S1300, when there is no matching audio advertisement, the processor 860 may determine that there is no audio advertisement matching the audio information (S1312). Then, the processor 860 may proceed to step S1110 of FIG. 11 again to collect audio information.

However, when there is a matching audio advertisement as a result of the retrieval in the step S1300, the processor 860 may detect a passenger on board the vehicle 100 (S1304). Furthermore, based on a result of detecting a passenger in the step S1304, a passenger profile may be detected (S1306).

For example, the processor 860 may determine the passenger's gender, age group, and the like based on the result of detecting the passenger in step S1304. Furthermore, based on the result of detecting the passenger, a profile corresponding to the passenger's gender and age group may be detected. Here, the passenger profile may be a profile including advertisement subjects that match the gender and age group of the detected passenger. As an example, when the retrieved passenger is a child, a profile including advertisement subjects such as toys or play equipment may be detected. On the contrary, when the retrieved passenger is an adult female, a profile including advertisement subjects such as cosmetics or perfume may be detected. Alternately, when the passenger is an adult male, a profile including advertisement subjects such as shoes or exercise equipment may be detected. Here, at least some of the advertisement subjects included in each profile may of course overlap with one another. For example, advertisement subjects that correspond to specific foods may be commonly included in all profiles.

Then, the processor 860 may determine whether a subject of the audio advertisement retrieved to match the currently collected audio information is included in a profile of the currently detected passenger (S1308). Here, the subject of the audio advertisement may be determined by the audio advertisement retrieved in the step S1300, and when an audio advertisement matching audio information is retrieved in the step S1300, an advertisement subject corresponding to the retrieved audio advertisement may be detected together with the retrieval of the audio advertisement.

As a result of the determination in the step S1308, when the subject of the detected audio advertisement is included in subjects set in a passenger profile detected in the step S1306, the processor 860 may determine that the audio advertisement corresponding to the collected audio information matches the passenger (S1310). Accordingly, the processor 860 may proceed to step S1116 of FIG. 11 to request advertisement information corresponding to the detected audio advertisement from the cloud server 900 and proceed with a process subsequent to the step S1116.

On the contrary, when the subject of the detected audio advertisement is not included in the subjects set in the passenger profile detected in the step S1306 as a result of the determination in the step S1308, the processor 860 may determine that the audio advertisement corresponding to the collected audio information does not match the passenger (S1312). In this case, advertisement information may not be requested from the cloud server 900, and advertisement information corresponding to the audio advertisement may not be received.

Meanwhile, the operation process illustrated in FIG. 13 may be carried out for respective passengers when there are a plurality of passengers seated in the cabin. Therefore, for the same audio advertisement, for passengers seated in some seats, the audio advertisement matching the collected audio information may be detected to correspond to the passengers, but for passengers seated in some other seats, the audio advertisement matching the collected audio information may be determined not to correspond to the passengers.

In this case, when it is determined that an audio advertisement matching the collected audio information corresponds to at least one passenger, the processor 860 may proceed to step S1116 of FIG. 11 to request advertisement information of an audio advertisement matching the collected audio information from the cloud server 900. Furthermore, according to a subsequent progress of FIG. 11, advertisement information may be received and stored. However, the processor 860 may control the interface unit 810 to display the stored advertisement information only on the display 251 corresponding to the passenger determined to match the audio advertisement. That is, whether to output advertisement information (POI information) may be determined based on whether the subject of the audio advertisement matches the result of detecting the passenger.

Meanwhile, in the foregoing description, it has been described that only the age group, gender, and the like, of the passenger are detected as a result of detecting the passenger, but the passenger may of course be identified as a specific person based on the result of detecting the passenger. In this case, the processor 860 may provide a customized passenger profile based on a result of identifying the passenger.

As an example, the processor 860 may generate, when the detected passenger is an identifiable preset passenger, a customized passenger profile corresponding to the passenger. In this case, the customized passenger profile may be a passenger profile that further includes at least one subject determined based on a preferred place of the identifiable passenger. In this case, the processor 860 may add or remove at least one of the advertisement subjects included in the customized passenger profile according to the preset passenger's request.

Accordingly, advertisement subjects that the preset passenger wants to receive may be included in the customized passenger profile, and advertisement subjects that the preset passenger does not want may be deleted. In this case, the advertisement information provision device 800 may request advertisement information corresponding to an audio advertisement from the cloud server 900 only for advertisement subjects included in the customized passenger profile. Therefore, when the customized passenger profile is applied, if the preset passenger is identified, then only the POI information items of advertisements corresponding to the advertisement subjects desired by the preset passenger from among the broadcast audio advertisements may be received from the cloud server 900.

Meanwhile, in response to a request from the advertisement information provision device 800 according to an embodiment of the present disclosure or audio information transmitted from the advertisement information provision device 800, the cloud server 900 may provide advertisement information that matches a current situation of the advertisement information provision device 800.

For example, the situation of the advertisement information provision device 800 may be a location of the advertisement information provision device 800, and when the advertisement information provision device 800 is mounted on the vehicle 100, the location of the advertisement information provision device 800 may be a location of the vehicle 100. Accordingly, the cloud server 900 may retrieve POI information corresponding to an audio advertisement corresponding to a request from the advertisement information provision device 800 or audio information transmitted from the advertisement information provision device 800, by reflecting a region where the vehicle 100 mounted with the advertisement information provision device 800 is currently located, and provide the retrieved POI information as advertisement information corresponding to the requested or transmitted audio information to the advertisement information provision device 800.

In the following description, for convenience of explanation, it is assumed that a current situation of the advertisement information provision device 800 is a location of the vehicle 100 mounted with the advertisement information provision device 800. In this case, the advertisement information provision device 800 may transmit information on the location of the vehicle 100 together with the audio information to the cloud server 900. In this case, the location of the vehicle 100 may be information on a predetermined region where the vehicle 100 is located.

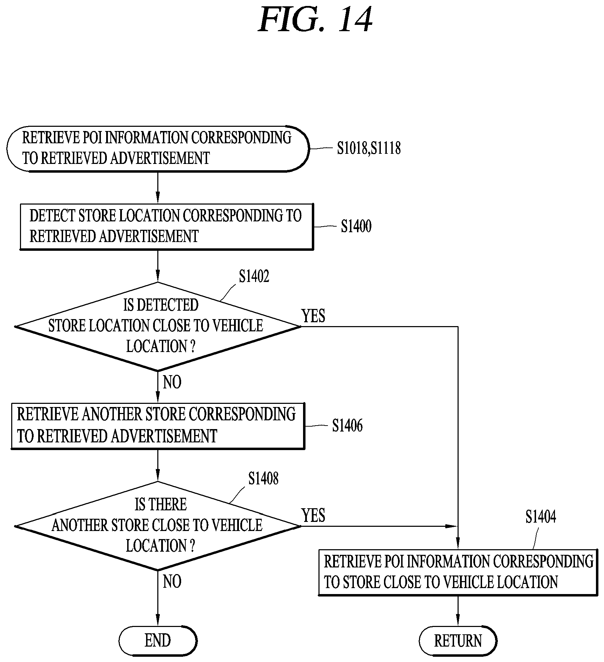

FIG. 14 is a flowchart illustrating an operation process in which the cloud server 900 provides advertisement information corresponding to an audio advertisement according to a current location of the advertisement information provision device 800 according to an embodiment of the present disclosure.

Referring to FIG. 14, when the cloud server 900 according to an embodiment of the present disclosure retrieves an audio advertisement matching audio information transmitted from the advertisement information provision device 800 (step S1018 of FIG. 10) or advertisement information corresponding to an audio advertisement according to a request of the advertisement information provision device 800 (step S1118 of FIG. 11), the cloud server 900 may detect a location of a store, business, or shop (hereinafter referred to as a store) corresponding to the audio advertisement (S1400).

Furthermore, the cloud server 900 may check whether the location of the detected store is within a preset distance from the location of the vehicle 100 (S1402). In this case, if the location of the vehicle 100 is information of a specific region, then the cloud server 900 may detect whether the detected store is located within the specific region, and determine that the store is located at a location close to the vehicle 100 when the store is located within the specific region as a result of the detection.

If the store is located at a location close to the vehicle 100 as a result of the determination in the step S1402, then the cloud server 900 may provide POI information including location information of the store close to the location of the vehicle 100 to the advertisement information provision device 800 as advertisement information retrieved in response to the audio advertisement according to the step S1018 of FIG. 10 or the step S1118 of FIG. 11 (S1404).

On the contrary, if the store is not located at a location close to the vehicle 100 as a result of the determination in the step S1402, then the cloud server 900 may further retrieve stores at other locations corresponding to the audio advertisement (S1406). In this case, stores at other locations corresponding to the audio advertisement may be stores of the same franchise corresponding to the audio advertisement or stores that provide the same service.

In this case, the cloud server 900 may retrieve, based on an audio advertisement retrieved according to audio information requested or received from the advertisement information provision device 800, stores that provide a service included in the audio advertisement. In this case, when the service provided in the audio advertisement is limited to a specific store, even though they are stores of the same franchise, they may not be stores corresponding to the audio advertisement. Accordingly, the cloud server 900 may detect other stores providing the same service as the retrieved audio advertisement based on the audio advertisement retrieved according to audio information requested or received from the advertisement information provision device 800 in the step S1406, and detect the locations of the other detected stores.

Furthermore, the cloud server 900 may detect whether there is a store close to a current location of the vehicle 100 from among the locations of other stores detected in the step S1406 (S1408). In this case, if the location of the vehicle 100 is information of a specific region, then the cloud server 900 may detect whether there is another store within the specific region that provides the same service as the retrieved audio advertisement.

Furthermore, as a result of the detection, when there is another store providing the same service as the retrieved audio advertisement within the specific region, the cloud server 900 may proceed to the step S1404 to provide a location of the other store to the advertisement information provision device 800 as advertisement information retrieved in response to the audio advertisement.

On the contrary, when there is another store providing the same service as the retrieved audio advertisement within the specific region, the cloud server 900 may determine that there is no POI information corresponding to the audio advertisement, and end an operation process of transmitting advertisement information corresponding to the retrieved audio advertisement. In this case, a response message notifying that there is no retrieved advertisement information may be transmitted to the advertisement information provision device 800.

Meanwhile, in the step S1400, a plurality of locations of stores corresponding to the audio advertisement may be detected. In this case, the cloud server 900 may detect, from among the locations of the plurality of detected stores, a store that is located within a region where the vehicle 100 is located or within a preset distance from a current location of the vehicle 100. Furthermore, as a result of the detection, POI information on at least one store located within the region where the vehicle 100 is located or within a preset distance from the current location of the vehicle 100 may be transmitted to the advertisement information provision device 800.

On the contrary, when there is no store located within the region where the vehicle 100 is located or within a preset distance from the current location of the vehicle 100, the cloud server 900 may determine that there is no POI information corresponding to the audio advertisement, and end an operation process of transmitting advertisement information corresponding to the retrieved audio advertisement. In this case, a response message notifying that there is no retrieved advertisement information may be transmitted to the advertisement information provision device 800.

Meanwhile, according to the foregoing description, it has been mentioned that the advertisement information provision device 800 according to an embodiment of the present disclosure can receive POI information as advertisement information corresponding to an audio advertisement and store the received POI information. Furthermore, it has been mentioned that the POI information can be output based on whether a preset output condition is satisfied.

In this case, the preset condition may be set in various ways. As an example, the preset condition may be a result of detecting a passenger. That is, when a passenger profile corresponding to a passenger detected as a result of detecting the passenger does not match an advertisement subject of an audio advertisement, the processor 860 may limit the output of POI information corresponding to the audio advertisement.

Additionally, the preset condition may be a driving path to a destination. As an example, when a driving path to a destination is set, the processor 860 may detect, from among the previously stored POI information items, whether there is POI information located within a preset distance from the set driving path. Furthermore, when at least one POI information located within a preset distance from the set driving path is detected, the display 251 may be controlled through the interface unit 810 to display the detected POI information items around the driving path.

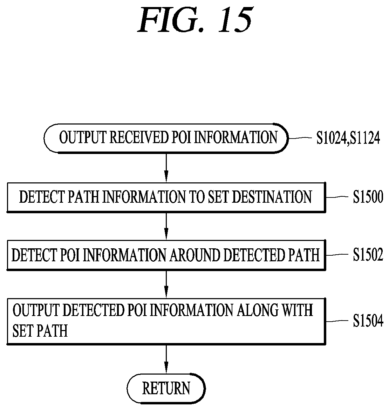

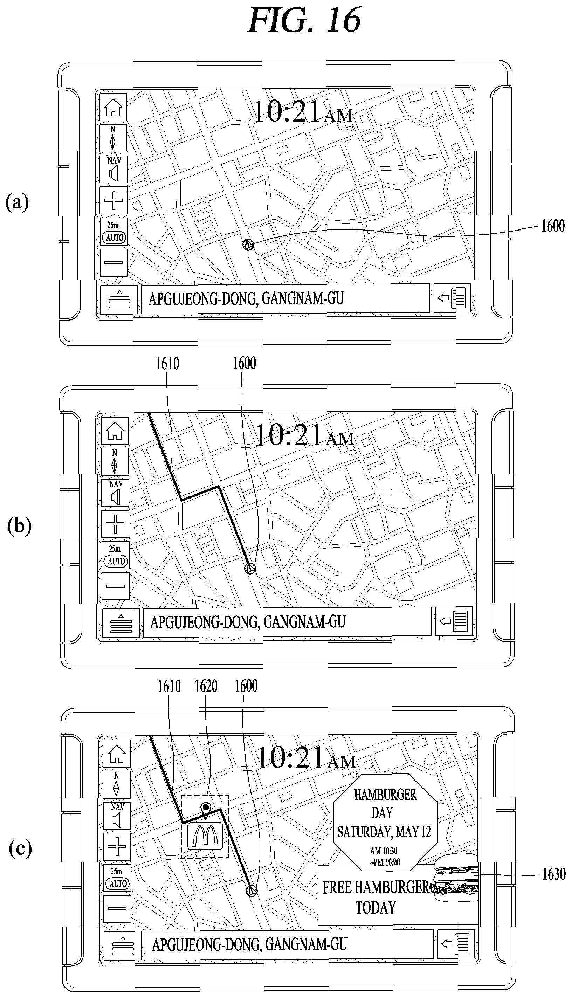

FIG. 15 is a flowchart illustrating an operation process of outputting advertisement information corresponding to at least one audio information based on a set driving path in the advertisement information provision device 800 according to an embodiment of the present disclosure as described above. Furthermore, FIG. 16 is an exemplary diagram illustrating an example in which POI information according to a previously broadcast audio advertisement is displayed according to a driving path set according to the operation process of FIG. 15.

First, referring to FIG. 15, the processor 860 of the advertisement information provision device 800 may store POI information when the POI information is received from the cloud server 900 as advertisement information corresponding to an audio advertisement. Furthermore, the process may proceed to step S1024 of FIG. 10 or step S1124 of FIG. 11 to display at least some of the stored POI information items on the display 251.

To this end, the processor 860 may detect the set driving path information from the navigation system 770 when a destination is set and a driving path to the destination is set through the navigation system 770 (S1500). Furthermore, based on the detected driving path, the processor 860 may detect whether there is POI information provided from the cloud server 900 around the driving path (S1502).

Here, the POI information provided from the cloud server 900 may be POI information corresponding to an audio advertisement retrieved according to a request from the advertisement information provision device 800. That is, at least one store corresponding to an audio advertisement previously output from the sound output unit 252 may be detected based on a driving path to a currently set destination. Furthermore, when a set driving path is displayed, at least one detected POI information may be displayed together with the driving path (S1504).

Referring to FIG. 16, (a) of FIG. 16 illustrates an example in which a location 1600 of the vehicle 100 before a destination is set, that is, a location of the advertisement information provision device 800, is displayed on the display 251. In this case, when a destination is specified, a driving path 1610 connecting the current location 1600 of the vehicle 100 to the destination may be set, as shown in (b) of FIG. 16.

Then, the processor 860 of the advertisement information provision device 800 may detect whether, among POI information items received in response to a request transmitted to the cloud server 900 in response to the collected audio information, there is POI information adjacent to the driving path 1610. In this case, when a location included in the POI information is within a preset distance from a point on the driving path 1610, the POI information may be POI information adjacent to the driving path 1610.

Furthermore, when there is detected POI information, the processor 860 may display the detected POI information 1620 on the display 251 on which the path information 1610 is displayed, as shown in (c) of FIG. 16. In this case, additional information 1630 included in the POI information 1620 may be further displayed on the display 251. Here, the additional information 1630, which is information on audio advertisements retrieved in response to the collected audio information, may include at least one of information on services provided through audio advertisements, periods during which the services are provided, and information items on stores or places where the services are provided.

Meanwhile, as described above, POI information corresponding to audio advertisements provided by the advertisement information provision device 800 may be displayed on the display 251 according to the driving path set to the destination. Accordingly, if the driving path changes due to a change in the destination or a change in a stopover, then the POI information displayed on the display 251 may also vary accordingly. That is, only POI information that matches the driving path may be displayed, thereby preventing unnecessary POI information from being displayed.

Meanwhile, when POI information is displayed according to the setting of the driving path, the processor 860 may determine that advertisement information corresponding to the POI information is exposed. In this case, the processor 860 may determine that an advertisement inflow effect has occurred for the passenger. In addition, the processor 860 may determine that advertisement information corresponding to the POI information is displayed when there is a user's input for the displayed POI information, for example, when there is a touch input for the additional information 1630 or a touch input for the POI information 1620, or when a destination setting for the POI information 1620 is requested. Furthermore, an effect of exposure of advertisement information corresponding to the POI information may be considered as an effect of exposure of advertisement information on an audio advertisement corresponding to the POI information.

Meanwhile, the processor 860 may transmit notification information corresponding to a number of advertisement information exposures accumulated over a preset period of time to the advertisement metadata server 950. Then, the advertisement metadata server 950 may quantitatively calculate an advertisement inflow effect for audio advertisements based on notification information provided from a plurality of advertisement information provision devices 800.

Meanwhile, according to the foregoing description, it has been mentioned that the advertisement information provision device 800 according to an embodiment of the present disclosure may provide information on the vehicle 100 to the mobile terminal of the user to whom information on the vehicle 100 is provided while at the same time providing POI information corresponding to the audio advertisement.

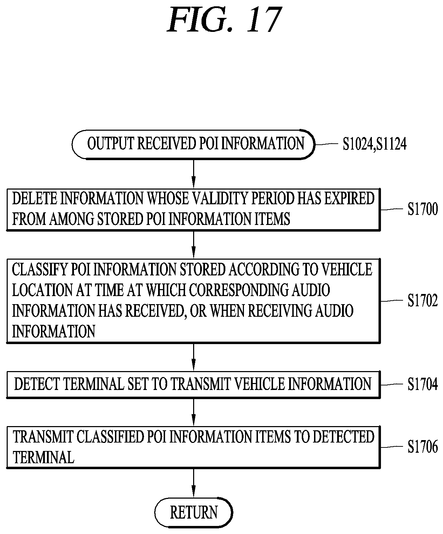

FIG. 17 is a flowchart illustrating an operation process in which advertisement information items corresponding to audio advertisements previously broadcast through a preset mobile terminal that provides information on the vehicle 100 is provided in the advertisement information provision device 800 according to an embodiment of the present disclosure in such a case.

Referring to FIG. 17, the processor 860 of the advertisement information provision device 800 may store POI information when the POI information is received from the cloud server 900 as advertisement information corresponding to an audio advertisement. In this case, among the stored POI information items, POI information items whose preset validity periods have expired may be deleted (S1700).

Then, the processor 860 may classify POI information items whose validity periods have not expired according to various classification criteria (S1710). For example, the processor 860 may classify POI information items stored in the memory 840 based on a time at which the corresponding audio information is collected, media information related thereto, or a location of the vehicle 100 detected when the audio information is received (S1702).

Furthermore, the processor 860 may detect a mobile terminal 1800 connected to the vehicle 100 to provide information of the vehicle 100 (S1704). Furthermore, a communication connection with the detected mobile terminal 1800 may be carried out. In this case, the mobile terminal 1800 may be connected to the advertisement information provision device 800 via the vehicle 100 or the communication device 400 of the vehicle 100.

When connected to the mobile terminal 1800, the processor 860 may transmit the POI information items classified in the step S1702 to the mobile terminal 1800. Furthermore, the mobile terminal 1800 may be controlled to display the transmitted POI information items on the display (S1706). Then, the mobile terminal 1800 may display a menu capable of retrieving the classified POI information items in one area of an interface screen where the information of the vehicle 100 is displayed.

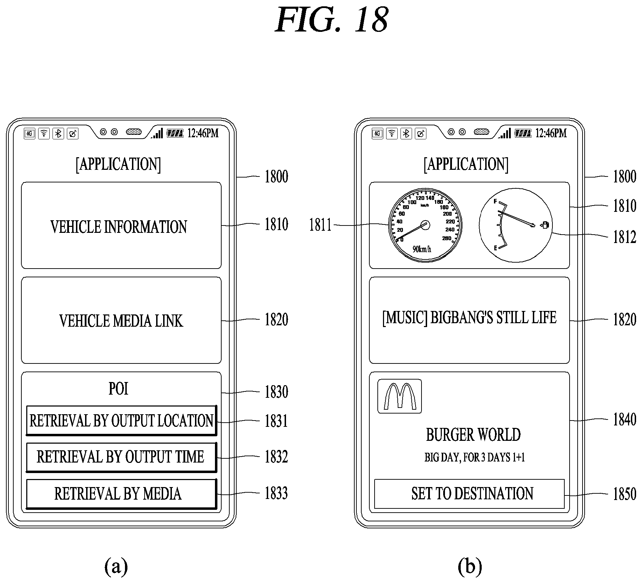

FIG. 18 is a flowchart illustrating an operation process in which classified POI information items are output through the mobile terminal 1800 according to the operation process of FIG. 17.

First, referring to (a) of FIG. 18, (a) of FIG. 18 shows an example in which a menu capable of retrieving the classified POI information items is displayed in one area of the interface screen where information of the vehicle 100 is displayed.

Turning to the interface screen, the interface screen may include a first area 1810 where the information of the vehicle 100 is displayed, a second area 1820 where media information items output through a media application are displayed in conjunction with the media application of the vehicle 100, and a third area 1830 where a menu capable of retrieving the classified POI information items is displayed.

In this case, the third area may display information on classification criteria of the POI information. As an example, when POI information items received and stored from the cloud server 900 in response to an audio advertisement is classified according to a location of the vehicle 100 where the audio advertisement is output and a time at which the audio advertisement is output, a retrieval menu 1831 by a location where the audio advertisement is output, that is, an output location, and a retrieval menu 1832 by a time at which the audio advertisement is output, that is, an output time, may be displayed in the third area 1830. In addition, when an audio advertisement is classified according to a media on which it is output, such as a broadcast program or channel, a media-specific menu 1833, which is a menu that allows to retrieve POI information according to the broadcast program or channel related to the audio advertisement, may be displayed in the third area 1830.

In this case, when any one of the menus 1831, 1832, 1833 displayed in the third area 1830 is selected, the mobile terminal 1800 may transmit menu selection information corresponding to the selected menu to the advertisement information provision device 800. Then, the processor 860 of the advertisement information provision device 800 may transmit classified POI information items corresponding to the received menu selection information to the mobile terminal 1800. Then, the mobile terminal 1800 may display the received POI information items on the display in response to the transmission of the menu selection information.

Then, the user may select any one of the POI information items displayed on the display of the mobile terminal 1800. Then, the selected POI information may be displayed in the third area. (b) of FIG. 18 illustrates an example in which the selected POI information is displayed in this manner.

Referring to (b) of FIG. 18, the first area 1810 may display speed information 1811 and fuel information 1812 of the vehicle provided from the vehicle 100. Additionally, the second area 1820 may display information on a song output by a music application, which is a media application. Furthermore, the third area 1830 may display POI information 1840 selected by the user.

In this case, the selected POI information 1840 may display information related to the content of a service provided through an audio advertisement, a name of a store where the service is provided, and a location of the store where the service is provided. The POI information 1840 may include a destination setting menu 1850 that can directly set a destination to an affiliated store providing the service in the vehicle 100. Accordingly, when the user selects the destination setting menu 1850, a driving path with a destination of a store providing a service broadcast through the audio advertisement may be set directly in the vehicle 100.

In this case, the processor 860 may detect a store providing a service broadcast through the audio advertisement in the same region as the vehicle 100 or within a preset distance from the vehicle 100 based on a current location of the vehicle 100, and may of course set the driving path only when there is the detected store.

Meanwhile, when POI information corresponding to audio fingerprint information transmitted to the cloud server 900 is stored, the advertisement information provision device 800 according to an embodiment of the present disclosure may of course perform a comparison, when the audio fingerprint information is collected, with the audio fingerprint information corresponding to the previously stored POI information. In this case, when the audio fingerprint information is the same, the processor 860 may determine that the corresponding POI information has already been received, and may not request POI information corresponding to the collected audio fingerprint information from the cloud server 900. Accordingly, for audio fingerprint information on which POI information has already been collected, POI information may not be requested again.

In addition, in the foregoing description, a configuration of identifying an audio advertisement based on audio fingerprint information is used as an example, but it may of course also be possible to identify an audio advertisement using an inaudible sound.

As an example, an advertiser may include an inaudible sound of a specific frequency band or pitch corresponding to his or her advertisement at the beginning of the audio advertisement when his or her advertisement is broadcast over an audio channel. In this case, the inaudible sound may be output in the form of a harmony along with a background music, but the passenger may not identify it as a sound in an inaudible band. However, the inaudible sound may be included in PCM data, and thus audio information (PCM data) corresponding to the sound in the inaudible band may also serve as audio fingerprint information. Therefore, the advertisement information provision device 800 or the cloud server 900 may of course identify an audio advertisement corresponding thereto based on PCM data corresponding to a sound of the inaudible band or a pattern of the PCM data.

The foregoing present disclosure may be implemented as computer-readable codes on a program-recorded medium. The computer-readable medium includes all kinds of recording devices in which data readable by a computer system is stored. Examples of the computer-readable medium include a hard disk drive (HDD), a solid state disk (SSD), a silicon disk drive (SDD), a ROM, a RAM, a CD-ROM, a magnetic tape, a floppy disk, an optical data storage device and the like, and also include a device implemented in the form of a carrier wave (for example, transmission via the Internet). Therefore, the detailed description should not be limitedly construed in all of the aspects, and should be understood to be illustrative. The scope of the present disclosure should be determined by reasonable interpretation of the appended claims, and all changes within the equivalent scope of the present disclosure are embraced by the appended claims.

## Claims

1. An advertisement information provision device, the device comprising:
a communication unit that communicates with a cloud server;
an interface unit disposed to perform a communication connection with a sound output unit and a display in a vehicle;
an audio detection unit that receives pulse code modulation (PCM) data stored in an audio buffer of the sound output unit through the interface unit and generates audio information including a feature of a sound signal output from the sound output unit; and
a processor that controls the communication unit to transmit the generated audio information to the cloud server, requests advertisement information including point-of-interest (POI) information of an audio advertisement corresponding to the audio information in response to the transmitted audio information from the cloud server, and controls, when the advertisement information is received from the cloud server by the request, the interface unit so as to display content included in the POI information and the received advertisement information on the display of the vehicle.

2. The device of claim 1, wherein the processor detects, when a driving path of the vehicle is set, at least one advertisement information whose location corresponding to the POI information is located within a preset distance from a point on the driving path from among advertisement information items received from the cloud server, and controls the interface unit so as to display the POI information and content included in the detected advertisement information on the display along with the driving path.

3. The device of claim 1, wherein the processor receives a result of detecting a passenger of the vehicle through the interface unit, detects at least one of advertisement information items received from the cloud server based on the result of detecting the passenger, and controls the interface unit so as to display the POI information and content included in the detected advertisement information on the display.

4. The device of claim 3, wherein the processor detects at least one of advertisement information items received from the cloud server based on a result of comparing advertisement subjects included in a passenger profile corresponding to the result of detecting the passenger with an advertisement subject of each of the advertisement information items received from the cloud server, and
wherein the passenger profile comprises preferred advertisement subjects according to the passenger's gender and age group.

5. The device of claim 4, wherein the processor generates, when advertisement subjects preferred by a specific passenger are learned, a customized passenger profile that includes the learned advertisement subjects, and detects, as the result of detecting the passenger, when the detected passenger is the specific passenger, at least one of the advertisement information items received from the cloud server based on the customized passenger profile, and
wherein the advertisement subjects preferred by the specific passenger are learned based on a place visited by the specific passenger above a predetermined number of times.

6. The device of claim 1, wherein the audio information comprises audio fingerprint information corresponding to a feature of the sound signal, and
wherein the audio fingerprint information is a PCM pattern analyzed from at least some of the samples of the PCM data sampled at regular time intervals.

7. The device of claim 6, wherein the processor controls the audio detection unit to further collect information on a time at which the PCM data is received and an application controlling the sound output unit when the PCM data is received, and transmits the audio fingerprint information and the information of the collected time and application as the audio information to the cloud server, and
wherein the cloud server detects audio advertisements corresponding to the audio fingerprint information, retrieves one audio advertisement from among the detected audio advertisements according to the information of the collected time and application as an audio advertisement corresponding to the audio information, and transmits advertisement information corresponding to the retrieved audio advertisement in response to the transmission of the audio information.

8. The device of claim 7, wherein the information of the application comprises at least one of information on a radio program, a radio channel, and a radio frequency broadcast through the application.

9. The device of claim 1, wherein the advertisement information comprises POI information including a name and location of a store, shop, or business providing a service corresponding to an audio advertisement corresponding to the audio information, and at least one graphic object representing information on the service corresponding to the audio advertisement.

10. The device of claim 1, further comprises:
an advertisement information identification unit that identifies an audio advertisement corresponding to the audio information,
wherein the processor requests advertisement information on a specific audio advertisement identified based on the audio information from the cloud server, and receives the advertisement information from the cloud server in response to the request.

11. The device of claim 10, wherein the advertisement information identification unit comprises audio fingerprint information items on a plurality of different audio advertisements as comparison data, and
identifies a specific audio advertisement corresponding to the feature of the sound signal by comparing the feature of the sound signal included in the audio information with the audio fingerprint information items included in the comparison data.

12. The device of claim 11, wherein the respective audio fingerprint information items are PCM patterns obtained by sampling PCM data corresponding to each audio advertisement at regular time intervals, and analyzing from at least some of the sampled PCM data items, and
wherein the feature of the sound signal is a PCM pattern analyzed from at least some of the samples of PCM data sampled at regular time intervals from the PCM data stored in the audio buffer of the sound output unit.

13. The device of claim 12, wherein the processor updates the comparison data based on update data provided from the cloud server, and
wherein the cloud server transmits, when a new audio advertisement is added, audio fingerprint information corresponding to the newly added audio advertisement to the advertisement information provision device as the update data.

14. The device of claim 1, wherein the communication unit performs a communication connection with a preset mobile terminal to receive information on the vehicle, and
wherein the processor controls the communication unit to display POI information and content of advertisement information received from the cloud server on the mobile terminal.

15. The device of claim 1, wherein the processor controls the interface unit to detect a validity period of a service included in each advertisement information, from respective advertisement information items received from the cloud server, and to display POI information and content of advertisement information whose validity period has not expired based on a current date and time on the display.

16. The device of claim 1, wherein the advertisement information provision device transmits a location of the vehicle acquired from the vehicle along with the audio information to the cloud server,
wherein the cloud server compares a location of a store providing a service of an audio advertisement corresponding to the audio information with the location of the vehicle, retrieves, when the location of the store does not match the location of the vehicle, a store matching the location of the vehicle from among other stores providing the service of the audio advertisement, and provides advertisement information including POI information corresponding to the retrieved store to the advertisement information provision device in response to the transmitted audio information, and
wherein the location of the vehicle is information on a predetermined region where the vehicle is located.

17. A method of controlling an advertisement information provision device that provides advertisement information corresponding to an audio advertisement, the method comprising:
receiving pulse code modulation (PCM) data stored in an audio buffer of a sound output unit in a vehicle to detect audio fingerprint information of an sound signal output from the sound output unit;
requesting advertisement information including point-of-interest (POI) information on a specific audio advertisement corresponding to the audio fingerprint information and information on a service provided through the specific audio advertisement from a cloud server;
checking, in response to the request, when advertisement information on the specific audio advertisement is received, whether an output condition of the received advertisement information is satisfied; and
displaying POI information of the received advertisement information and information of the service on a display of the vehicle based on a result of the check.

18. The method of claim 17, wherein the requesting of the advertisement information from the cloud server comprises:
identifying one audio advertisement corresponding to audio fingerprint information detected from PCM data of the audio buffer based on comparison data including audio fingerprint information items of a plurality of different audio advertisements; and
requesting advertisement information corresponding to the identified one audio advertisement from the cloud server.

19. The method of claim 17, wherein the audio fingerprint information is a PCM pattern analyzed from at least some of the samples of the PCM data sampled at regular time intervals.

20. A cloud server comprising:
a communication unit that receives audio fingerprint information;
an advertisement information database comprising audio fingerprint information items respectively corresponding to a plurality of different audio advertisements, and advertisement information items including point-of-interest (POI) information corresponding to information on services provided from the respective plurality of audio advertisements and location information of stores providing the services;
a retrieval engine that retrieves advertisement information of a specific audio advertisement corresponding to the received audio fingerprint information from the advertisement information database; and
a server controller that controls the communication unit to control the retrieval engine to retrieve, when the audio fingerprint information is received through the communication unit, an audio advertisement corresponding to the received audio fingerprint information and to transmit, when the audio advertisement is retrieved, advertisement information of the retrieved audio advertisement as a response to the received audio fingerprint information.
